# EUROPEAN PATENT SPECIFICATION

(11) **EP 0 890 308 B1**
(45) Date of publication and mention of the grant of the patent: **08.10.2003**
(21) Application number: 98305350.5
(22) Date of filing: 06.07.1998
(51) Int. Cl.: A01N 25/26

(54) **Coated pesticidal matrices, a process for their preparation and compositions containing them**
Überzogene pestizide Matrizes, Verfahren zu ihrer Herstellung und sie enthaltende Zusammensetzungen
Matrices de pesticides enrobés, procédé pour leur préparation et compositions les contenant

(30) Priority: 09.07.1997 US 890437; 09.06.1998 US 94279
(43) Date of publication of application: 13.01.1999
(73) Proprietor: BASF AKTIENGESELLSCHAFT, 67056 Ludwigshafen (DE)
(72) Inventor: Sun, Guanglin, Plainsboro, New Jersey 08566 (US); Ahmed, Fakhruddin, Princeton Junction, New Jersey 08550 (US); Black, Bruce Christian, Yardley, Pennsylvania 19067 (US)
(74) Representative: Hartz, Nikolai F., Dr.

(56) References cited:
- EP-A- 0 697 170
- US-A- 4 948 586

## Description

Certain pesticidal agents are inactivated by ultra-violet radiation from the sun. Because those pesticidal agents are useful for the control of pests and are applied in areas where they will be exposed to ultraviolet radiation, there is a need for photostable compositions containing those agents.

To prevent ultraviolet inactivation of pesticidal agents, compositions have been prepared which contain ultraviolet absorbers and/or reflectors and a pesticidal agent.

U.S. Patent 3,541,203 describes a protected virus composition for insect control. The preferred composition includes a virus, an actinic light absorbing material and a polymeric binder material. However, the process used to prepare the preferred compositions of U.S. Patent 3,541,203 requires the use of toxic materials and numerous washing steps with flammable solvents thus making it unsuitable for commercial manufacture.

U.S. Patent 4,948,586 discloses a microencapsulated insecticidal pathogen. Four microencapsulated compositions are shown to decrease the photoinactivation of *Autographa californica* NPV. However, the microencapsulated compositions retain only from 30.7 to 71.43% of the original activity upon exposure to sunlight. U.S. Patent 4,948,586 discloses a method of preparing microencapsulated insecticidal pathogens which has numerous steps and is both time-consuming and laborious. It is apparent that neither the process, nor the microencapsulated insecticidal pathogens, described in U.S. Patent 4,948,586, are entirely satisfactory for providing a product stable to ultraviolet radiation.

U.S. Patent 5,560,909 discloses a process for the preparation of insecticidal compositions which requires the modification of the charge of a charged polymer to precipitate the polymer and entrap the insecticide. However, this process is not entirely satisfactory because a small amount of the functional groups on the polymer will remain charged in the final product, resulting in a less efficacious product.

EP 697170-A1 discloses a process for the preparation of coated pesticidal agents which requires that the coating polymer be completely dissolved and which adjusts the pH of the coating solution to attain such dissolution.

Unfortunately, such dissolution reduces some of the desirable properties of the coating polymer, resulting in a less efficacious product.

The present invention comprises an improved process for the preparation of a coated pesticidal matrix, which process comprises: a) preparing an aqueous mixture comprising a pesticidal agent, a pH-dependent polymer and water, wherein the pH of the aqueous mixture prepared is below the solubilization pH of the polymer; and b) drying the aqueous mixture to produce the coated pesticidal matrix. The aqueous mixture optionally includes a plasticizer, an ultraviolet protector, an activity enhancer and/or a glidant thus resulting in their presence in the coated pesticidal matrix. Preferably, the pesticidal agent is a particulate chemical insecticide or a viral, bacterial or fungal insecticidal pathogen.

The present invention also comprises wettable powder pesticidal compositions which comprise coated pesticidal matrices, together with suitable carriers.

The present invention further comprises a method for improving the residual control of a pest comprising the application of a matrix made by the process of this invention.

It is an object of the present invention to provide a coated pesticidal matrix which retains the desirable properties of the coating polymer and thus retains a significant amount of its original pesticidal activity after exposure to ultra-violet radiation.

It is also an object of the present invention to provide an improved process for the preparation of a coated pesticidal matrix under mild conditions which avoid degradation of the pesticidal agent.

Other objects of this invention will be apparent to those skilled in the art from the following description and the appended claims.

### DETAILED DESCRIPTION OF THE INVENTION

The improved process of this invention comprises:
a) preparing an aqueous mixture comprising a pesticidal agent, a pH-dependent polymer that in insoluble below pH 5.5 and water, provided that the pH of the aqueous mixture is below the solubilization pH of the pH-dependent polymer; and
b) drying the aqueous mixture of step (a) to produce a coated pesticidal matrix.

Advantageously, it has been found that coated pesticidal matrices, prepared from a pH-dependent polymer without converting a substantial number of free carboxylic acid groups in the polymer to their salt form, retain a high percentage of their original activity after exposure to ultraviolet radiation and have greater residual activity compared to coated pesticidal agents prepared by the coating process described in EP 697170-A1. The instant process accomplishes this by providing an aqueous mixture wherein the pH is below the solubilization pH of the pH-dependent polymer.

The coated pesticidal matrices of the invention preferably comprise about 1 to 50% by weight of a pesticidal agent, more preferably about 5 to 35% by weight of a pesticidal agent. They preferably comprise about 5 to 50% by weight of a pH-dependent polymer, more preferably about 10 to 45% by weight of a pH-dependent polymer. They preferably comprise about 0 to about 25% by weight of a plasticizer, more preferably about 0 to about 25% by weight of a plasticizer. They preferably comprise about 0 to about 30% by weight of an ultraviolet protector, more preferably about 0 to about 20% by weight of an ultraviolet protector. They preferably comprise about 0 to about 75% by weight of an activity enhancer, more preferably about 0 to about 45% by weight of an activity enhancer. They preferably comprise about 0 to about 15% by weight of a glidant more preferably about 0 to about 10% by weight of a glidant.

In a preferred embodiment of the present invention, coated pesticidal matrices prepared by the process of this invention comprise about 1 to 50% by weight of a pesticidal agent, about 5 to 50% by weight of a pH-dependent polymer, 0 to about 25% by weight of a plasticizer, 0 to about 30% by weight of an ultraviolet protector, 0 to about 75% by weight of an activity enhancer, and 0 to about 15% by weight of a glidant.

More preferred coated pesticidal matrices prepared by the process of this invention are those comprising about 5 to 35% by weight of a pesticidal agent, about 10 to 45% by weight of a pH-dependent polymer, 0 to about 25% by weight of a plasticizer, 0 to about 20% by weight of an ultraviolet protector, 0 to about 45% by weight of an activity enhancer, and 0 to about 10% by weight of a glidant.

The aqueous mixture of this invention may be dried using any conventional drying technique which allows the pH-dependent polymer to form a coating film on the outside, and a binding film inside, of the matrix particles. Preferably, the aqueous mixture is spray dried or air dried. The coated pesticidal matrices of the present invention preferably have a particle size less than about 20 µm, and, more preferably, have a particle size of about 2 µm to 10 µm.

Pesticidal agents suitable for use in the present invention include chemical and biological insecticides, acaricides, nematicides, fungicides, herbicides, and the like, and mixtures thereof. In particular, pesticidal agents which are subject to inactivation of their desired activity by ultraviolet radiation are preferred pesticidal agents for use in this invention.

Chemical insecticides include, but are not limited to, arylpyrroles such as chlorfenapyr; amidinohydrazones such as hydramethylnon; hydrazinecarboxyamides such as those described in U.S. 5,543,573; 1,4-diaryl-2-fluoro-2-butenes such as those described in EP 811593-A1, including 1-[1-(*p*-chlorophenyl)-2-fluoro-4-(4-fluoro-3-phenoxyphenyl)-2-butenyl]cyclopropane, (R,S)-(Z)-; 1-substituted-2-(nitromethylene)imidazolidines such as imidacloprid and 1-(6-chloro-3-pyridyl)-2-(nitromethylene)imidazolidine; phenylpyrazoles such as fipronil; and the like, and mixtures thereof. The chemical insecticides of this invention, when in solid form, preferably have a particle size prior to coating of less than about 10 µm and, more preferably, have a particle size of about 0.1 µm to 5 µm.

Biological insecticides include all naturally occuring and genetically modified varieties of insect biological control agents such as viral pathogens, bacterial pathogens, and fungal pathogens. Viral pathogens suitable for use include DNA viruses, RNA viruses and unclassified insect viruses such as gonad-specific virus (GSV).

The DNA viruses include double stranded enveloped DNA viruses such as (Subfamily, then species) *Entomopoxvirinae* (*Melolontha melolontha* entomopoxvirus), and *Eubaculovirinae* (*Autographa californica* MNPV; *Heliocoverpa zea* NPV; *Trichoplusia ni* GV), as well as double stranded nonenveloped DNA viruses such as *Iridoviridae* (*Chilo* iridescent virus) and single stranded nonenveloped DNA viruses such as *Parvoviridae* (Galleria densovirus).

The RNA viruses include double stranded enveloped RNA viruses such as *Togaviridae* (Sindbis virus), *Bunyaviridae* (Beet leafcurl virus) and *Flaviviridae* (Wesselbron virus), as well as double stranded nonenveloped RNA viruses such as *Reoviridae* (Corriparta virus) and *Birnaviridae* (Drosophila X virus), as well as single stranded nonenveloped RNA viruses such as *Picornaviridae* (Cricket paralysis virus), *Tetraviridae* (*Heliothis armigera* stunt *virus) and Nodaviridae* (Black beetle virus).

The Subfamily of double stranded DNA viruses *Eubaculovirinae* includes two genera, nuclear polyhedrosis viruses (NPVs) and granulosis viruses (GVs), which are particularly useful for biological control because they produce occlusion bodies in their life cycle. Examples of NPVs include *Lymantria dispar* NPV (gypsy moth NPV); *Autographa californica* NPVs such as V8vEGTDEL, V8vEGTDEL-AaIT, AcMNPV E2, AcMNPV L1, AcMNPV V8, and AcMNPV Px1; *Anagrapha falcifera* NPV (celery looper NPV); *Spodoptera* littoralis NPV; *Spodoptera frugiperda* NPV; *Heliothis armigera* NPV; *Mamestra brassicae* NPV; *Choristoneura fumiferana* NPV; *Trichoplusia ni* NPV; *Heliocoverpa zea* NPV; and *Rachiplusia ou* NPV; and the like. Examples of GVs include *Cydia pomonella* GV (coddling moth GV), *Pieris brassicae* GV, *Trichoplusia ni* GV, *Artogeia rapae* GV, *Plodia interpunctella* GV (Indian meal moth), and the like. Examples of entomopox viruses (EPVs) include *Melolontha melolontha* EPV, *Amsacta moorei* EPV, *Locusta migratoria* EPV, *Melanoplue sanguinipes* EPV, *Schistocerca gregaria* EPV, *Aedes aegypti* EPV, *Chironomus luridus* EPV, and the like.

Bacterial pathogens suitable for use include, but are not limited to, *Bacillus thuringiensis, Bacillus lentimorbus, Bacillus cereus, Bacillus popilliae, Photorhabdus luminescens, Xenorhabdus nematophilus*, and the like. Fungal pathogens suitable for use include, but are not limited to, *Beauveria bassiana, Entomophthora spp., Metarrhizium anisopliae,* and the like.

AcMNPV E2 is described in EP 621337, and co-pending U.S. Serial No. 08/009,264, filed January 25, 1993 . AcMNPV V8 and V8vEGTDEL are described in U.S. Patent 5,662,897 . V8vEGTDEL-AaIT is described in EP 697170-A1 and co-pending U.S. Serial No. 08/322,679, filed July 27, 1994. AcMNPV Px1 is described in co-pending provisional U.S. Serial No.60/084,705, filed May 8, 1998.

Herbicides suitable for use in the present invention include chemical and biological herbicides. Chemical herbicides include, but are not limited to, dinitro-anilines ; such as pendimethalin and trifluralin; imidazolinones such as imazethapyr, imazaquin, imazamethabenz-methyl, imazapyr, imazamox and imazapic; haloacetanilides such as alachlor, metolachlor, and propachlor; and the like; and mixtures thereof. Biological herbicides include, but are not limited to, fungal pathogens such as a *Dactylaria higginsii*, and the like, and mixtures thereof.

pH-Dependent polymers suitable for use in the present invention include polymers which are essentially insoluble below about pH 5.5, such as ethyl acrylate/methacrylic acid copolymers, methyl methacrylate/methacrylic acid copolymers, methacrylic acid/methyl acrylate/methyl methacrylate copolymers and the like, and mixtures thereof. Preferred pH-dependent polymers include ethyl acrylate/methacrylic acid copolymers particularly those wherein the ratio of free carboxyl groups to esters is about 1:1 (Eudragit® L 30 D, solubilization pH > 5.5, available from Röhm Pharma GmbH, Weiterstadt, Germany; and Kollicoat® MAE 30 D, solubilization pH > 5.5, available from BASF, Ludwigshafen, Germany), methyl methacrylate/methacrylic acid copolymers particularly those wherein the ratio of free carboxyl groups to esters is from about 1:1 to about 1:2 (Eudragit® S100, 1:2 ratio, solubilization pH > 7.0, available from Röhm Pharma; and Eudragit® L100, 1:1 ratio, solubilization pH > 6.0, available from Röhm Pharma), methacrylic acid/methyl acrylate/methyl methacrylate copolymers particularly those wherein the ratio of methacrylic acid, methyl acrylate and methyl methacrylate monomers is about 1:5:2 to 3:7:3 (Preparation 4110D, 1:6.5:2.5 ratio, solubilization pH > 7.2, available from Röhm Pharma), and mixtures thereof.

The pH-dependent polymer should be essentially insoluble below about pH 5.5 to prevent premature release of the pesticide when the coated pesticidal matrix is applied to the locus of a pest. In addition, when the pesticidal agent is an insecticide, the pH-dependent polymer is preferably soluble in the environment of the insect's gut so that the pesticidal agent may be readily released from the coated pesticidal matrix. Preferably, the pH-dependent polymer should be soluble above about pH 7 to ensure that the pesticide is readily released in the insect's gut.

In a preferred embodiment of the process of this invention, the methyl methacrylate/methacrylic acid copolymer is partially solubilized with base to reduce agglomeration of the copolymer particles prior to drying. However, it should be understood that the amount of base added is well below the amount required to fully solubilize the copolymer. Typically, less than about 10% of the free carboxylic acid groups of the copolymer are converted to salts. Bases suitable for use to partially solubilize the methyl methacrylate/methacrylic acid copolymers of this invention include ammonium hydroxide, alkali metal hydroxides, alkaline earth metal hydroxides and the like, with ammonium hydroxide being preferred.

Plasticizers may be used in the process of this invention to reduce the minimum film forming temperature of the pH-dependent polymer. Plasticizers suitable for use in the present invention include any of the conventional agents known in the art such as poly(ethylene glycols), poly(propylene glycols), diethyl phthalate, dibutyl phthalate, citric acid esters such as triethyl citrate and the like, castor oil, triacetin and the like or mixtures thereof. Preferred plasticizers include poly(ethylene glycols) having an average molecular weight of about 1,000 to 10,000 and triethyl citrate.

Ultraviolet protectors may be used in the present invention to reduce the photoinactivation of the pesticidal agent. Ultraviolet protectors suitable for use include ultraviolet absorbers and ultraviolet reflectors or mixtures thereof. Ultraviolet absorbers include various forms of carbon, such as carbon black (charcoal); benzophenones, such as 2-hydroxy-4-methoxybenzophenone (CYASORB® UV9, available from Cytec Industries, West Paterson, New Jersey), 2,2'-dihydroxy-4-methoxybenzophenone (CYASORB® UV24, available from Cytec Industries), 2-hydroxy-4-acryloyloxyethoxybenzophenone (CYASORB® UV2098, available from Cytec Industries), 2-hydroxy-4-n-octoxybenzophenone (CYASORB® UV531, available from Cytec Industries); dyes, such as congo red, malachite green, malachite green hydrochloride, methyl orange, methyl green, brilliant green, acridine yellow, FDC green, FDC yellow, FDC red, and the like. Ultraviolet reflectors include titanium dioxide and the like. Preferred ultraviolet protectors include carbon black, benzophenones, dyes and titanium dioxide; with titanium dioxide, carbon black, CYASORB® UV9 and CYASORB® UV24 being most preferred.

Activity enhancers are used in this invention to enhance pesticidal activity of the pesticidal agent. Activity enhancers suitable for use in this invention include fluorescent brighteners described in U.S. Patent 5,124,149 and stilbene compounds described in U.S. Patent 5,246,936. In addition to enhancing pesticidal activity, the stilbene compounds also provide some protection from ultraviolet radiation. Preferred stilbene compounds are the analogues of 4,4'-diamino-2,2'-stilbene disulfonic acid, namely, a Calcofluor White® (available from Sigma Chemical Co., St. Louis, Missouri) such as Calcofluor White M2R®, Calcofluor White ABT®, Calcofluor White LD®, Calcofluor White RWP®, etc.; a Blancophor® (available from Mobay Chemicals, Pittsburgh, Pennsylvania) such as Blancophor BBH®, Blancophor MBBH® Blancophor BHC®, etc.; an INTRAWITE® (a heterocyclic stilbene derivative, available from Crompton and Knowles Corp., Charlotte, North Carolina) such as INTRAWITE® CF, etc.; a Leucophor® (available from Sandoz Chemicals Corp., Charlotte, North Carolina) such as Leucophor BS®, Leucophor BSB®, Leucophor EKB®, Leucophor PAB® etc.; a Phorwite® (available from Mobay Chemicals) such as Phorwite AR®, Phorwite BBU®, Phorwite BKL®, Phorwite CL®, Phorwite RKK®, etc. and the like. Blancophor BBH®, Calcofluor White M2R® and Phorwite AR® are the most preferred stilbene compounds.

Glidants may be used in the process of this invention to keep the dried, coated pesticidal matrix particles from sticking together. In addition, the glidant may also provide some protection from ultraviolet radiation. Glidants suitable for use in this invention include talc, magnesium stearate, calcium stearate, calcium sulfate and the like or mixtures thereof, with talc being preferred.

Other compatible additives such as preservatives, stabilizers (trehalose), anti-foam agents, anti-mold agents, anti-fungal agents, anti-bacterial agents and the like may also be included in the matrices of the present invention. Clearly, anti-fungal agents and anti-bacterial agents generally need not be used when fungal pathogens and bacterial pathogens, respectively, are used.

The compositions of the present invention may be wettable powders comprising one or more dispersing agents, one or more flow enhancing agents, one or more bulking agents, one or more wetting agents and/or one or more pH-modifying agents. Such wettable powders preferably comprise about 2 to 15% by weight of a dispersing agent, more preferably about 2 to 15% by weight of a dispersing agent and most preferably about 2 to 10% by weight of a dispersing agent. They preferably comprise about 1 to 10% by weight of a flow enhancing agent, more preferably about 1 to 10% by weight of a flow enhancing agent. They preferably comprise about 10 to 60% by weight of a bulking agent, more preferably about 10 to 60% by weight of a bulking agent and most preferably about 20 to 50% by weight of a bulking agent. They preferably comprise about 0 to about 15% by weight of a wetting agent, more preferably about 0 to about 15% by weight of a wetting agent. They preferably comprise about 0 to about 20% by weight of a pH-modifying agent, more preferably about 0 to about 20% by weight of a pH-modifying agent and most preferably about 2 to 20% by weight of a pH-modifying agent. They preferably comprise about 5 to 75% by weight of a coated pesticidal matrix prepared by the process of this invention, more preferably about 5 to 75% by weight of a coated pesticidal matrix prepared by the process of this invention and most preferably about 15 to 60% by weight of a coated pesticidal matrix.

The present invention also provides wettable powder pesticidal compositions which comprise about 0.5 to 40% by weight of a dispersing agent; about 1 to 10% by weight of a flow enhancing agent; about 10 to 70% by weight of a bulking agent; 0 to about 25% by weight of a wetting agent; 0 to about 35% by weight of a pH-modifying agent; and about 5 to 75% by weight of a coated pesticidal matrix prepared by the process of this invention.

Preferred wettable powder pesticidal compositions of the present invention are those comprising about 2 to 15% by weight of a dispersing agent; about 1 to 10% by weight of a flow enhancing agent; about 10 to 60% by weight of a bulking agent; 0 to about 15% by weight of a wetting agent; 0 to about 20% by weight of a pH-modifying agent; and about 5 to 75% by weight of a coated pesticidal matrix prepared by the process of this invention.

When the pesticidal agent is a biological agent, the wettable powder compositions of this invention preferably comprise about 2 to 10% by weight of a dispersing agent; about 1 to 10% by weight of a flow enhancing agent; about 20 to 50% by weight of a bulking agent; about 2 to 20% by weight of a pH-modifying agent; and about 15 to 60% by weight of a coated biological agent matrix prepared by the process of this invention.

Dispersing agents useful in the wettable powder pesticidal compositions of this invention include any of the conventional agents known in the art. Preferred dispersing agents are anionic agents, such as salts of the condensation products of formaldehyde with the sulfonation products of polycyclic aromatic compounds, sodium lignosulfonate and the like or mixtures thereof with the sodium sulfonate of naphthalene formaldehyde condensates such as MORWET® D425 (available from Witco), LOMAR® PW (available from Henkel, Ambler, Pennsylvania) and DARVAN® 1 (available from R.T. Vanderbilt Co., Norwalk, Connecticut) being most preferred.

Flow enhancing agents useful in the wettable powder pesticidal compositions of this invention include conventional flow enhancing agents known in the art with silicates such as calcium silicates being preferred. MICRO-CEL® E (a synthetic calcium silicate hydrate available from Celite Corp., Lompoc, California) is the most preferred flow enhancing agent.

Bulking agents suitable for use in the compositions of the present invention include natural and synthetic clays and silicates, e.g., natural silicas such as diatomaceous earths; magnesium silicates such as talcs; magnesium aluminum silicates such as attapulgites and vermiculites; aluminum silicates such as kaolinites, montmorillonites and micas; and hydrated aluminum silicates such as kaolin clay. Preferred bulking agents are hydrated aluminum silicates, aluminum silicates, magnesium silicates and magnesium aluminum silicates, with kaolin clay being the most preferred bulking agent.

Wetting agents suitable for use in the present invention include any of the conventional agents known in the art. Preferred wetting agents include anionic agents such as sodium N-methyl-N-oleoyltaurate, octylphenoxy polyethoxy ethanol, nonylphenoxy polyethoxy ethanol, sodium dioctyl sulfosuccinate, sodium dodecyl benzene sulfonate, sodium lauryl sulfate, sodium alkyl naphthalene sulfonate, sodium sulfonated alkyl carboxylate and the like or mixtures thereof. A mixture of sodium alkyl naphthalene sulfonate and sodium sulfonated alkyl carboxylate (MORWET® EFW available from Witco, Houston, Texas) is a highly preferred wetting agent.

pH-Modifying agents are used to maintain the pH of aqueous tank-mixes prepared from the compositions of this invention below about pH 5. pH-Modifying agents suitable for use include, but are not limited to, potassium hydrogen phthalate, and solid organic acids such as citric acid, glutamic acid, maleic acid, *d,l*-malic acid, glutaric acid, isophthalic acid, succinic acid, fumaric acid, adipic acid, and the like, and mixtures thereof. Citric acid is especially useful as the pH-modifying agent in the compositions of this invention. In the compositions of this invention, it is preferable to use a granular organic acid having a mean particle size greater than about 50 µm, preferably greater than about 100 µm. The use of a granular organic acid improves the storage stability of the wettable powder compositions of this invention when compared to wettable powder compositions containing a micronized organic acid.

The wettable powder pesticidal compositions of the present invention are typically prepared by blending a mixture of a dispersing agent, a bulking agent, a flow enhancing agent, optionally a wetting agent and optionally a pH-modifying agent to form a premix. This premix is then blended with the coated pesticidal matrix to form the desired wettable powder pesticidal compositions of the present invention.

For the control of pests, the wettable powder pesticidal compositions of this invention are diluted with water to form an aqueous tank-mix and the tank-mix is applied to the locus of the pest.

Surprisingly, it has been discovered that the coated pesticidal matrices of this invention provide improved residual control of pests when compared to coated pesticidal agents prepared according to the aqueous coating process described in EP 697170-A1. Accordingly, the present invention provides a method for improving the residual control of a pest by applying to the locus of the pest a pesticidally effective amount of a coated pesticidal matrix prepared by the process of this invention.

Other ingredients such as attractants, stickers, antifoaming agents and the like may also be added to the wettable powder compositions of this invention. However, those additional ingredients are generally added separately to the tank-mix. An adjuvant or mixture of adjuvants may also be added to the tank-mix.

In order to facilitate a further understanding of the invention, the following examples are presented primarily for the purpose of illustrating more specific details thereof. The invention should not be deemed limited thereby except as defined in the claims.

### EXAMPLE 1

### Preparation of coated pesticidal matrices using an ethyl acrylate/methacrylic acid copolymer

A mixture of V8vEGTDEL polyhedral inclusion bodies (PIBs) (12.43 g of technical material, 7.5 g of PIBs, about 1.27 x 10¹¹ PIBs/gram, mean PIB size about 2.5 µm), water (65.02 g), Blancophor BBH® (28.04 g, mean particle size about 1 µm), PEG 5000 (poly(ethylene glycol) average MW 5000, 14.0 g of a 10 wt/wt% solution), and Kollicoat® MAE 30 D (46.71 g) is stirred to obtain a slurry. The slurry is filtered through an 80 mesh screen and spray dried using a Büchi spray drier (model 190) to obtain the coated pesticidal matrix identified as composition 1 in Table II.

Using essentially the same procedure, but using the ingredients listed in Table I, the coated pesticidal matrices identified as compositions 2-17 in Table II are prepared.

**TABLE I**

| Pesticidal Agent | |
|---|---|
| a. | V8vEGTDEL polyhedral inclusion bodies |
| b. | V8vEGTDEL-AaIT polyhedral inclusion bodies |
| c. | Hydramethylnon |
| d. | *Bacillus thuringiensis* |
| | |

| Ethyl Acrylate/Methacrylic Acid Copolymer | |
|---|---|
| e. | Kollicoat® MAE 30 D |
| f. | Eudragit® L 30 D |
| | |

| Plasticizer | |
|---|---|
| g. | PEG 5000 |
| h. | PEG 8000 |
| | |

| Stilbene Compound | |
|---|---|
| i. | Blancophor BBH® |
| j. | Calcofluor M2R® |
| | |

| UV-Protector | |
|---|---|
| k. | Titanium dioxide |
| l. | Charcoal |
| | |

| Additional Compound | |
|---|---|
| m. | Antifoam A® (a polydimethylsiloxane and silica antifoam agent available from Dow Corning, Midland, Michigan) |

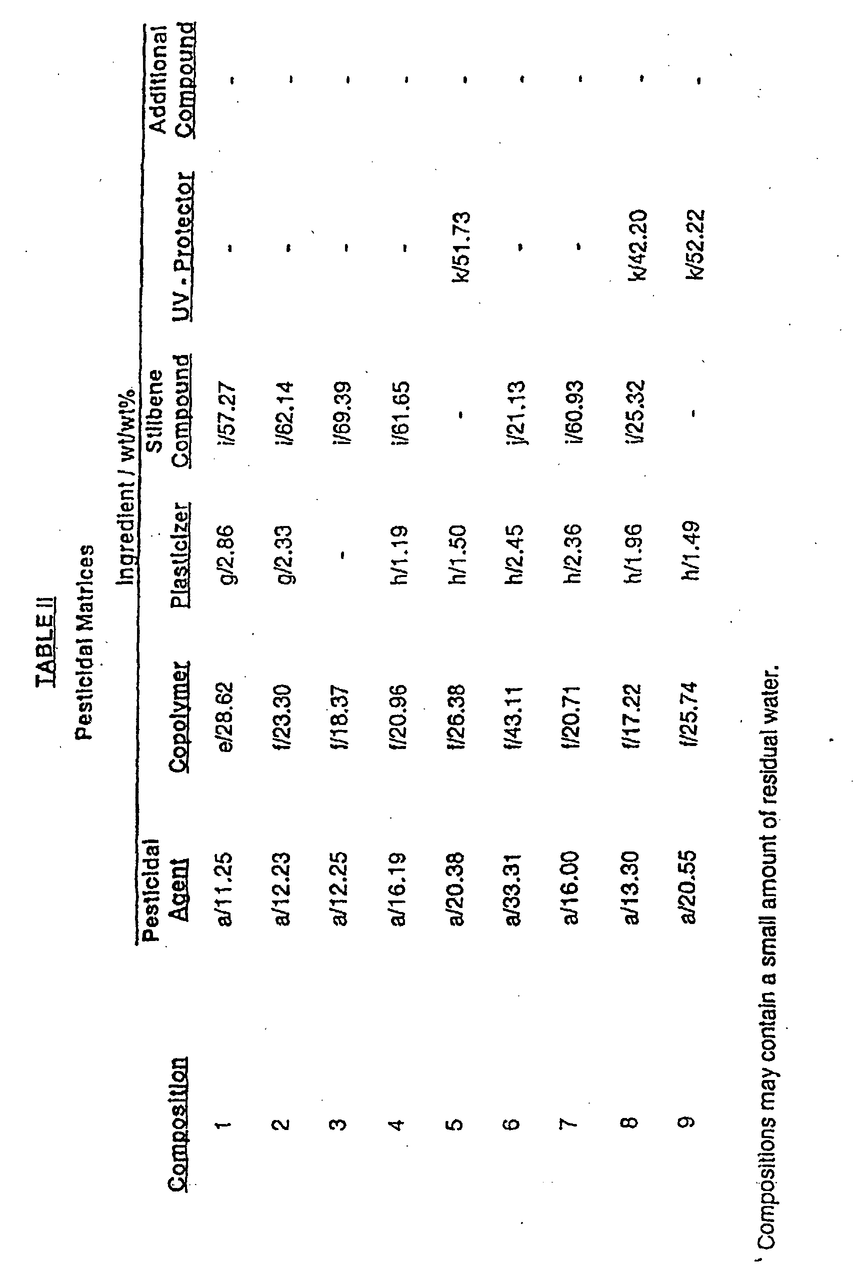

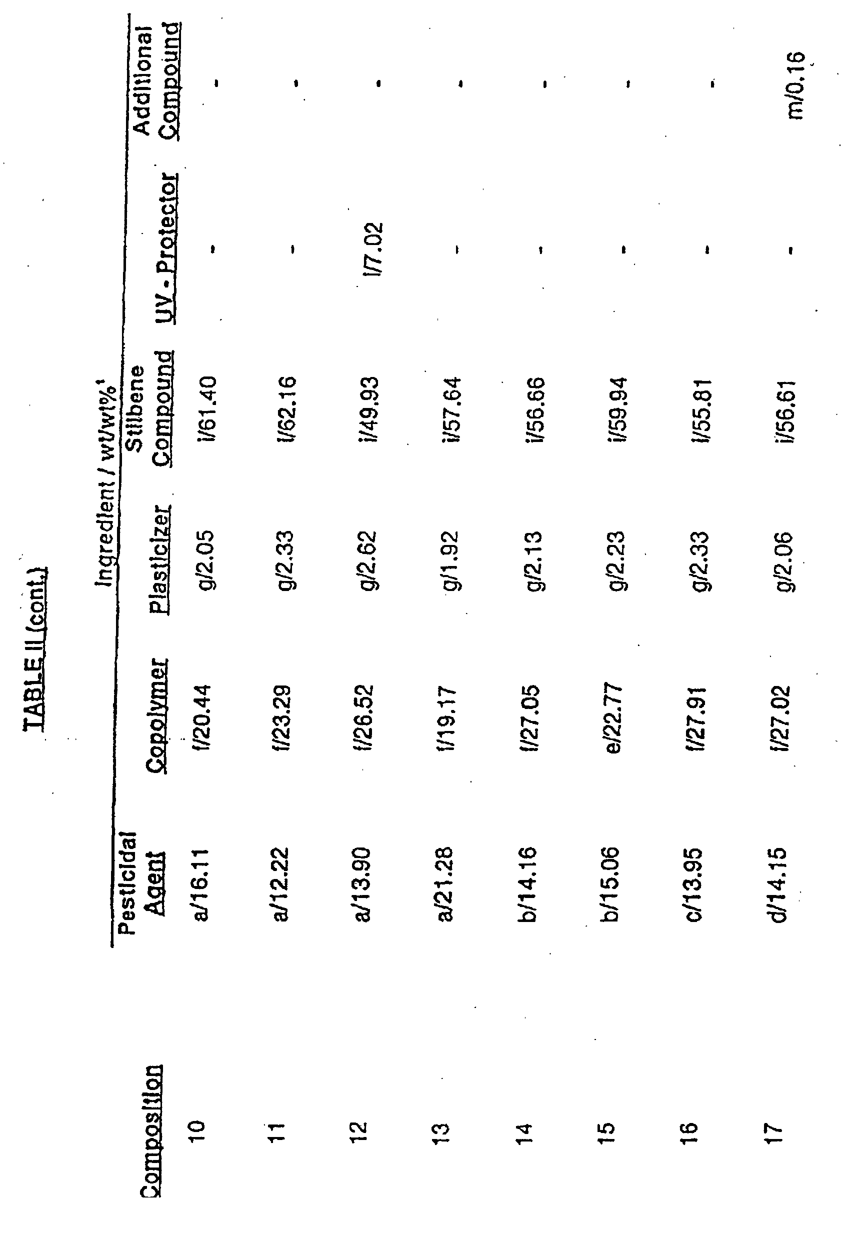

### EXAMPLE 2

### Preparation of coated pesticidal matrices using a methyl methacrylate/methacrylic acid copolymer

A slurry is prepared by sequentially mixing V8vEGTDEL polyhedral inclusion bodies (13.0 g of technical material, 6.0 g of PIBs, about 1.27 x 10¹¹ PIBs/gram, mean PIB size about 2.5 µm), water, 56.6 g of a copolymer slurry (previously prepared by mixing Eudragit® S100 (30.0 g), water (166 g), 1 N ammonium hydroxide solution (15.24 g) and triethyl citrate (15.0 g)), Blancophor BBH® (14.0 g), talc (3.21 g), charcoal (9.0 g), a solution of Calcofluor M2R® (14.0 g) in water, and water. The resultant slurry is then filtered through an 80 mesh screen and spray dried using a Büchi spray drier (model 190) to obtain the coated pesticidal matrix identified as composition 18 in Table IV.

Using essentially the same procedure, but using the ingredients listed in Table III, the coated pesticidal matrices identified as compositions 19-26 in Table IV are. prepared.

**TABLE III**

| Pesticidal Agent | |
|---|---|
| a. | V8vEGTDEL polyhedral inclusion bodies |
| b. | V8vEGTDEL-AaIT polyhedral inclusion bodies |
| c. | Yeast |
| | |

| Methyl Methacrylate/Methacrylic Acid Copolymer | |
|---|---|
| d. | Eudragit® S100 |
| e. | Eudragit® L100 |
| | |

| Plasticizer | |
|---|---|
| f. | Triethyl citrate |
| | |

| UV-Protector | |
|---|---|
| g. | Charcoal |
| | |

| Stilbene Compound | |
|---|---|
| h. | Blancophor BBH® |
| i. | Calcofluor M2R® |
| | |

| Glidant | |
|---|---|
| j. | Talc |
| | |

| Additional Compound | |
|---|---|
| k. | Citric acid |
| l. | Microat® afa Complex (an antioxidant available from Nurture Inc., Missoula, Montana) |

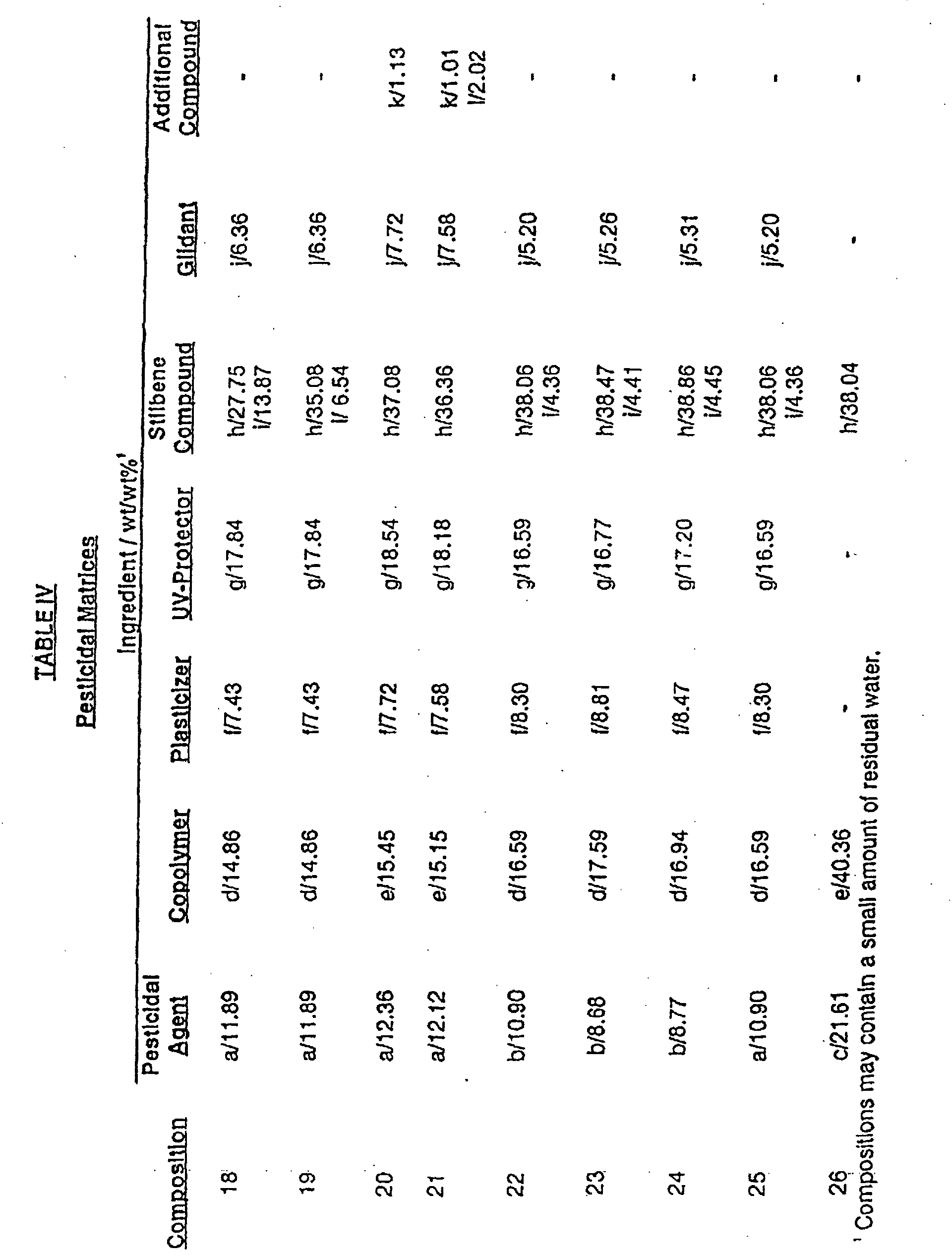

### EXAMPLE 3

### Preparation of coated pesticidal matrices using a methacrylic acid/methyl acrylate/methyl methacrylate copolymer

A mixture of chlorfenapyr (3.00 g, mean particle size about 2.5 µm), water (100.00 g), Blancophor BBH® (12.00 g, mean particle size about 1 µm), triethyl citrate (0.23 g), a 20% solution of Preparation 4110D (22.50 g), talc (3.00 g), and MORWET®D425 (1.50g) is stirred to obtain a slurry. The slurry is filtered through an 80 mesh screen and spray dried using a Buchi spray drier (model 190) to obtain the coated pesticidal matrix identified as composition 27 in Table VI.

Using essentially the same procedure, but using the ingredients listed in Table V, the coated pesticidal matrices identified as compositions 28-32 in Table VI are prepared.

**TABLE V**

| Pesticidal Agent | |
|---|---|
| a. | Chlorfenapyr |
| b. | Hydramethylnon |
| c. | 1-(6-Chloro-3-pyridyl)-2-(nitromethylene)imidazolidine |
| d. | V8vEGTDEL-AaIT polyhedral inclusion bodies |
| | |

| Methacrylic Acid/Methyl Acrylate/Methyl Methacrylate Copolymer | |
|---|---|
| Preparation 4110D | |
| | |

| Plasticizer | |
|---|---|
| Triethyl citrate | |
| | |

| Stilbene Compound | |
|---|---|
| e. | Blancophor BBH® |
| f. | Calcofluor M2R® |
| | |

| UV-Protector | |
|---|---|
| Charcoal | |
| | |

| Glidant | |
|---|---|
| Talc | |
| | |

| Additional Compound | |
|---|---|
| MORWET®D425 | |

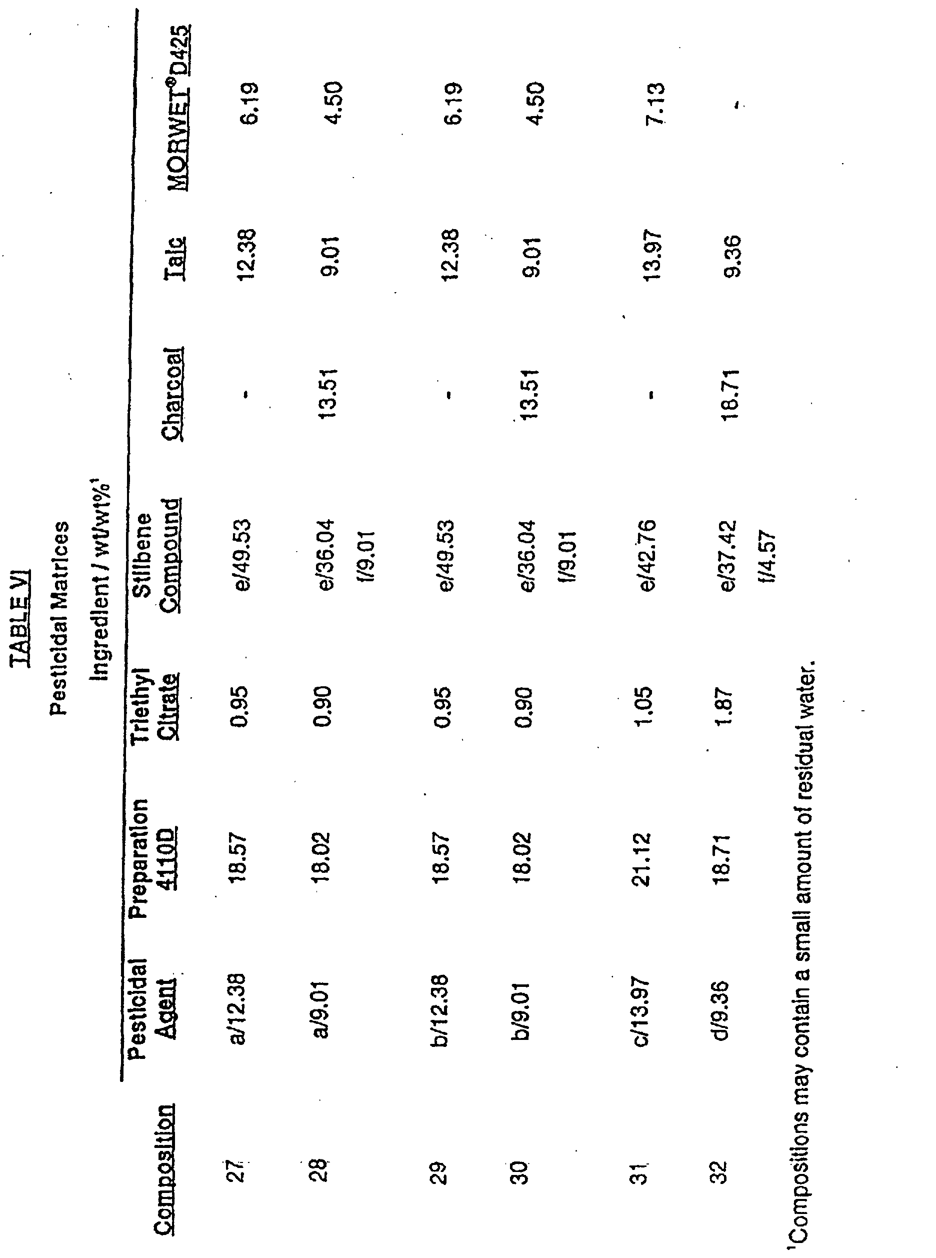

### EXAMPLE 4

### Preparation of a coated pesticidal matrix using a methyl methacrylate/methacrylic acid copolymer, REAX® 85A and Indulin® C

A mixture of V8vEGTDEL polyhedral inclusion bodies (13.0 g of technical material, 6.0 g of PIBs, about 1.27 x 10¹¹ PIBs/gram, mean PIB size about 2.5 µm) and ammonium hydroxide solution (15.0 g, pH 9.5) is stirred for 15 minutes, treated with REAX® 85A (0.18 g, a sodium lignosulfonate available from Westvaco, Charleston Heights, South Carolina), stirred for 15 minutes, treated with Indulin® C (12.0 g of a 2% solution, pH 11, a sodium lignate available from Westvaco), stirred for one hour, and adjusted slowly to pH 4.5 with dilute sulfuric acid over 2.5 hours. After stirring for 45 minutes, the polyhedral inclusion body mixture is mixed with the copolymer slurry described in Example 2 (56.6 g), Blancophor BBH® (14.70 g), talc (3.21 g), charcoal (9.0 g), a solution of Calcofluor M2R® (3.30 g) in water, and water to obtain a slurry. The slurry is filtered through an 80 mesh screen and spray dried using a Büchi spray drier (model 190) to obtain the coated pesticidal matrix identified as composition 33 in Table VII.

**TABLE VII**

| **Composition 33** | |
|---|---|
| **Ingredient** | **wt/wt%** |
| V8vEGTDEL polyhedral inclusion bodies | 12.53 |
| Eudragit® S100 | 15.66 |
| Triethyl citrate | 7.83 |
| Charcoal | 18.80 |
| Blancophor BBH® | 30.70 |
| Calcofluor M2R® | 6.89 |
| Talc | 6.70 |
| Indulin® C | 0.50 |
| REAX® 85A | 0.38 |

### EXAMPLE 5

### Preparation of wettable powder pesticidal compositions

The coated pesticidal matrix identified as composition 18 in Table IV (23.13 g) is added to a premix of MORWET® EFW (3.84 g), MORWET® D425 (7.68 g), kaolin clay (23.03 g), MICRO-CEL® E (2.30 g), and citric acid (11.52 g). The resultant mixture is blended to obtain the wettable powder composition identified as composition 34 in Table VIII.

Using essentially the same procedure, the wettable powder compositions identified as compositions 35-53 in Table VIII are prepared.

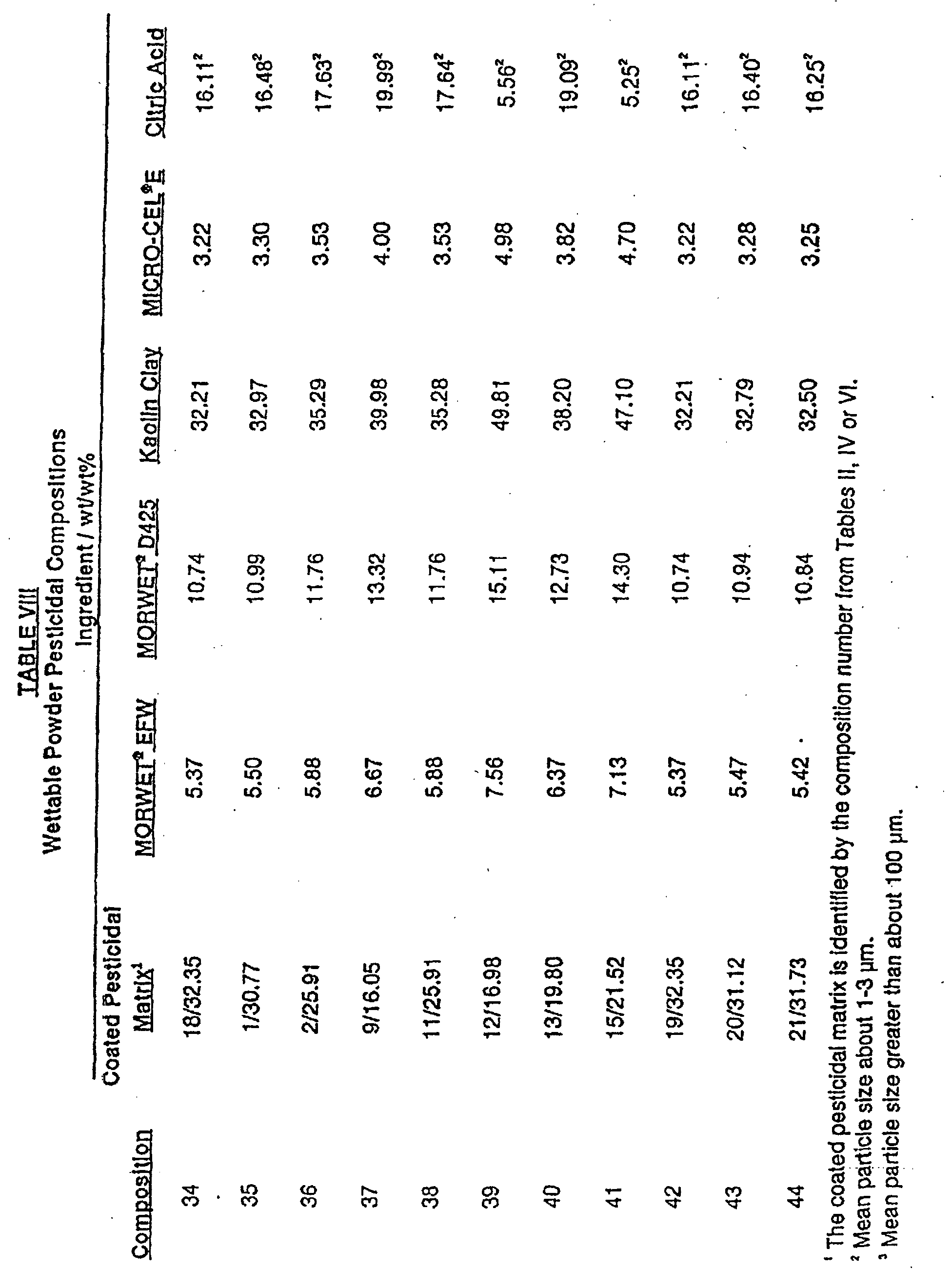

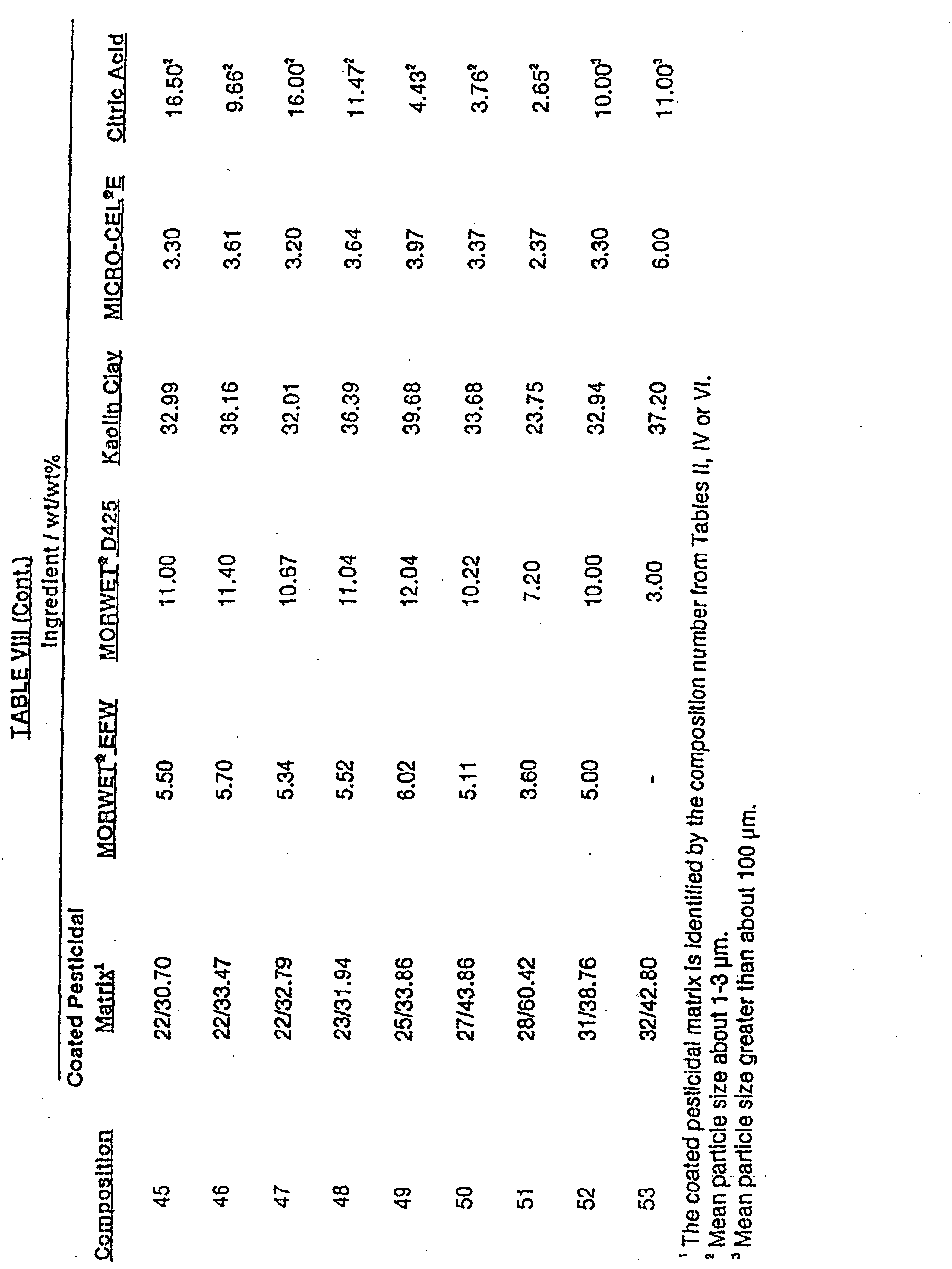

### EXAMPLE 6

### Evaluation of wettable powder pesticidal compositions of this invention and a wettable powder pesticidal composition disclosed in EP 697170-A1 against tobacco budworms

Wettable powder compositions 34, 36, 37 and 43, and a control composition, identified below, are tested for efficacy against neonate tobacco budworms, *H. virescens*, on cotton variety IAC-22 through bioassay of field-treated foliage. Each composition is mixed with water, 0.2 w/v% KINETIC® (nonionic surfactant mixture available from Helena Chemical Co., Memphis, Tennessee), and 3.5 w/v% MIRASPERSE® (2-hydroxypropyl ether starch available from A.E. Staley Manufacturing Co., Decatur, Illinois). In addition, 0.1 w/v% citric acid is added to the aqueous control composition. Treatments are applied with a CO₂ backpack sprayer calibrated to deliver 200 L/ha using 61 cm (2 ft) boom with hollow-cone nozzles (3/row; 1 centered and 2 drop).

For bioassay, leaves are collected 1-2 hours following application for initial activity and 1, 2, 3, and 4 days after treatment for residual activity. The treated leaves are placed in petri dishes with moist filter papers (1 leaf/dish; 4 larvae/dish; 16 dishes/treatment with a total of 64 larvae/treatment/sampling period). After allowing the larvae to feed on the treated leaves for four days, they.are transferred to diet trays containing pieces of untreated cotton leaves; one larva/cell. After 4 days, the surviving larvae are counted. The results are summarized in Table IX.

As can be seen from the data in Table IX, compositions containing coated pesticidal matrices prepared by the process of the present invention, in general, have greater residual activity against *H. virescens* than the control composition prepared by the aqueous process described in EP 697170-A1. In particular, composition 34 has significantly greater residual activity than the control composition. This is an especially surprising discovery because the copolymer used in composition 34 and the control composition is the same Eudragit® S100.

| **Control Composition** | |
|---|---|
| **Ingredient** | **wt/wt%** |
| ¹Coated pesticidal agent | 25.14 |
| MORWET® EFW | 5.94 |
| MORWET® D425 | 11.89 |
| Kaolin Clay | 35.64 |
| MICRO-CEL® E | 3.56 |
| Citric Acid | 17.83 |

| | |
|---|---|
| ¹Prepared according to the aqueous process described in EP 697170-A1. The coated pesticidal agent contains 15.31 wt/wt% V8vEGTDEL polyhedral inclusion bodies, 15.31 wt/wt% Eudragit® S100, 0.43 wt/wt% PEG 8000, 23.04 wt/wt% charcoal and 45.92 wt/wt% Blancophor BBH®. | |

**TABLE IX**

| **Percent Mortality of *H. virescens* on Cotton variety IAC-22** | | | | | |
|---|---|---|---|---|---|
| | **Days After Treatment** | | | | |
| **Treatment** | **0** | **1** | **2** | **3** | **4** |
| Composition 34 | 100 | 92 | 95 | 89 | 75 |
| Composition 36 | 98 | 97 | 77 | 75 | 66 |
| Composition 37 | 97 | 94 | 92 | 77 | 67 |
| Composition 43 | 98 | 95 | 95 | 86 | 80 |
| Control composition | 95 | 86 | 83 | 73 | 69 |
| Untreated | 5 | 2 | 5 | 8 | 6 |

### EXAMPLE 7

### Evaluation of wettable powder pesticidal compositions against tobacco budworms on cotton and lettuce

Compositions 39 and 49 from Table VIII are tested for efficacy against neonate tobacco budworms, *Heliothis virescens*, on lettuce variety Green-Towers and cotton variety Delta-Pine 51 through bioassay of field-treated foliage. The plots are strips of cotton and lettuce (ca. 40 ft long) with 92 cm (3 ft) row spacing. Each composition is mixed with water and applied at 8 x 10¹¹ polyhedral inclusion bodies/acre. DIPEL® 2X (*Bacillus thuringiensis* var. Kurstaki, available from Abbott Laboratories, North Chicago, Illinois) is applied at 1.12 kg/10000 m² (1.0 lb product/acre) as a standard. Treatments are applied with a CO₂ backpack sprayer calibrated to deliver 188 l/10000 m² (20 gallons per acre) using a 61 cm (2 ft) boom with hollow-cone nozzles (3/row; 1 centered and 2 drop).

For bioassay, leaves are collected 1-2 hours following application for initial activity and 2, 3, 4 and 5 days after treatment for residual activity. The treated leaves are placed in petri dishes with moist filter papers (1 leaf/dish; 4 larvae/dish; 16 dishes/treatment with a total of 64 larvae/treatment/sampling period). After allowing the larvae to feed on the treated leaves for two days, they are transferred to diet trays; one larva/cell. The surviving larvae are also counted at 2, 4, 6 and 8 days after transfer to diet. The results are summarized in Tables X and XI. As can be seen from the data in Tables X and XI, the pesticidal compositions of this invention (compositions 39 and 49) have greater residual activity against tobacco budworms after 4, 6 and 8 days on diet than DIPEL® 2X.

**TABLE X**

| **Percent Mortality of Tobacco Budworms on Cotton** | | | | | | |
|---|---|---|---|---|---|---|
| **Treatment** | **Days After Transfer to Diet** | **Days After Treatment** | | | | |
| | | **0** | **2** | **3** | **4** | **5** |
| Composition 39 | 0 | 4 | 3 | 2 | 1 | 2 |
| | 2 | 24 | 9 | 6 | 3 | 4 |
| | 4 | 49 | 23 | 14 | 6 | 13 |
| | 6 | 50 | 27 | 16 | 7 | 15 |
| | 8 | 51 | 27 | 16 | 8 | 15 |
| | | | | | | |
| Composition 49 | 0 | 2 | 3 | 2 | 0 | 5 |
| | 2 | 52 | 17 | 9 | 7 | 6 |
| | 4 | 90 | 57 | 29 | 11 | 14 |
| | 6 | 91 | 59 | 31 | 15 | 16 |
| | 8 | 91 | 59 | 33 | 16 | 16 |
| | | | | | | |
| DIPEL® 2X | 0 | 29 | 9 | 6 | 2 | 4 |
| | 2 | 37 | 13 | 7 | 4 | 6 |
| | 4 | 56 | 14 | 10 | 4 | 6 |
| | 6 | 56 | 14 | 12 | 5 | 6 |
| | 8 | 56 | 14 | 12 | 5 | 6 |
| | | | | | | |
| Untreated | 0 | 1 | 2 | 1 | 1 | 2 |
| | 2 | 1 | 4 | 2 | 3 | 4 |
| | 4 | 2 | 6 | 3 | 3 | 5 |
| | 6 | 2 | 6 | 4 | 3 | 5 |
| | 8 | 2 | 6 | 4 | 3 | 5 |

**TABLE XI**

| **Percent Mortality of Tobacco Budworms on Lettuce** | | | | | | |
|---|---|---|---|---|---|---|
| **Treatment** | **Days After Transfer to Diet** | **Days After Treatment** | | | | |
| | | **0** | **2** | **3** | **4** | **5** |
| Composition 39 | 0 | 27 | 5 | 2 | 5 | 1 |
| | 2 | 72 | 36 | 16 | 20 | 11 |
| | 4 | 94 | 84 | 62 | 55 | 50 |
| | 6 | 95 | 85 | 67 | 59 | 52 |
| | 8 | 95 | 86 | 67 | 60 | 52 |
| | | | | | | |
| Composition 49 | 0 | 16 | 3 | 7 | 1 | 6 |
| | 2 | 73 | 24 | 23 | 18 | 16 |
| | 4 | 98 | 88 | 78 | 62 | 55 |
| | 6 | 99 | 88 | 85 | 62 | 58 |
| | 8 | 99 | 88 | 85 | 62 | 59 |
| | | | | | | |
| DIPEL® 2X | 0 | 100 | 53 | 42 | 45 | 29 |
| | 2 | 100 | 70 | 50 | 57 | 35 |
| | 4 | 100 | 70 | 56 | 58 | 37 |
| | 6 | 100 | 70 | 56 | 58 | 38 |
| | 8 | 100 | 70 | 56 | 58 | 38 |
| | | | | | | |
| Untreated | 0 | 2 | 1 | 2 | 2 | 4 |
| | 2 | 2 | 2 | 5 | 2 | 6 |
| | 4 | 4 | 5 | 6 | 3 | 9 |
| | 6 | 4 | 5 | 6 | 4 | 10 |
| | 8 | 4 | 5 | 6 | 6 | 10 |

### EXAMPLE 8

### Evaluation of non-irradiated and irradiated wettable powder compositions against Heliothis virescens

Plastic bioassay trays containing 32 open-faced wells (4 x 4 x 2.5 cm, L x W x H) per tray are utilized as test arenas in this evaluation. Five mL of Stoneville diet (soybean/wheat germ) is poured into each well and allowed to harden. Aqueous suspensions of the wettable powder pesticidal compositions are evenly spread over the surface of the hardened diet to provide 2 x 10³ V8vEGTDEL polyhedral inclusion bodies per well. Half of the trays are placed under ultraviolet lamps (two FS40UVB bulbs set 30 cm above the trays, Atlantic Ultraviolet Corp., Bay Shore, NY) for four hours. All trays are then infested with one three-day-old *H. virescens* larva per well. The wells are covered with a vented, clear plastic sheet and held under constant fluorescent light at a temperature of about 27 °C. After ten days, the wells are examined and larval mortality measurements are made. The results are summarized in Table XII.

Advantageously, the wettable powder pesticidal compositions of this invention (composition numbers 35, 36, 38 and 40) retain at least 73 percent of their original activity after being exposed to ultraviolet light for 4 hours.

**TABLE XII**

| **Evaluation Of Non-Irradiated and Irradiated Wettable Powder Pesticidal Compositions Against *H. Virescens*** | | |
|---|---|---|
| **Wettable Powder Composition**^{**1**} | **Irradiation Exposure (hours)** | **Percent Larval Mortality** |
| 35 | 0 | 98 |
| | 4 | 74 |
| | | |
| 36 | 0 | 98 |
| | 4 | 80 |
| | | |
| 38 | 0 | 97 |
| | 4 | 75 |
| | | |
| 40 | 0 | 97 |
| | 4 | 71 |

| | | |
|---|---|---|
| ¹ Composition number from Table VIII. | | |

### EXAMPLE 9

### Field evaluation of wettable powder pesticidal compositions against tobacco budworms on tobacco in North Carolina

A field evaluation is conducted on tobacco grown near Clayton, North Carolina. A wettable powder composition of this invention (composition 46) at 2 x 10¹¹, 5 x 10¹¹, and 8 x 10¹¹ bodies/acre, *Bacillus thuringiensis* (DIPEL® 2X, Abbott Laboratories) at 1,12 kg wettable powder (WP)/10000 m² (1.0 lb wettable powder (WP)/acre), and acephate (ORTHENE® 75SP, available from Valent USA, Walnut Creek, California) at 0,84 kg active ingredient /10000 m² (0.75 lb active ingredient (ai)/acre) are compared for efficacy against *H. virescens*. Biological materials are suspended in water containing an insect gustatory stimulant (PHEAST® available from AGRISENSE, Fresno, California); aqueous dilutions of acephate contained no PHEAST®. Treatments and untreated check are replicated four times (small plots) in a randomized complete block design. By using fine-hair brushes, 1- to 2-day old laboratory-reared *H. virescens* are placed on the underside of leaves in each plot. Natural infestation of *H. virescens* also occurred at the test site. Treatments are applied to tobacco about 2 hours before each artificial larval infestation on days 1 and 8. Treatments are applied with a tractor-mounted, CO₂-pressurized boom sprayer which is calibrated to deliver 95 l /10000 m² (25 gallons/acre) through a single D2-33 nozzle centered over each tobacco row. Boom pressure during application is 4,14 Bars (60 lb/in²).

At 2 and 5 days after first application and 5 and 9 days after second application, live *H. virescens* are counted on 20 plants in each plot. Additionally, visual estimate of leaf damage caused by larval feeding is made 14 days after the second application using the rating scale shown below. The results are summarized in Table XIII.

| **Rating Scale** | |
|---|---|
| **Rating** | **Meaning** |
| 4 | Severe Damage |
| 3 | Heavy Damage |
| 2 | Moderate Damage |
| 1 | Slight Damage |
| 0 | No Damage |

As can be seen from the data in Table XIII, the wettable powder composition of this invention (composition 46) provides good control of *H. virescens* on tobacco. In fact, on day 17 of the test, the invention composition provides greater control of *H. virescens* than DIPEL® 2X and acephate.

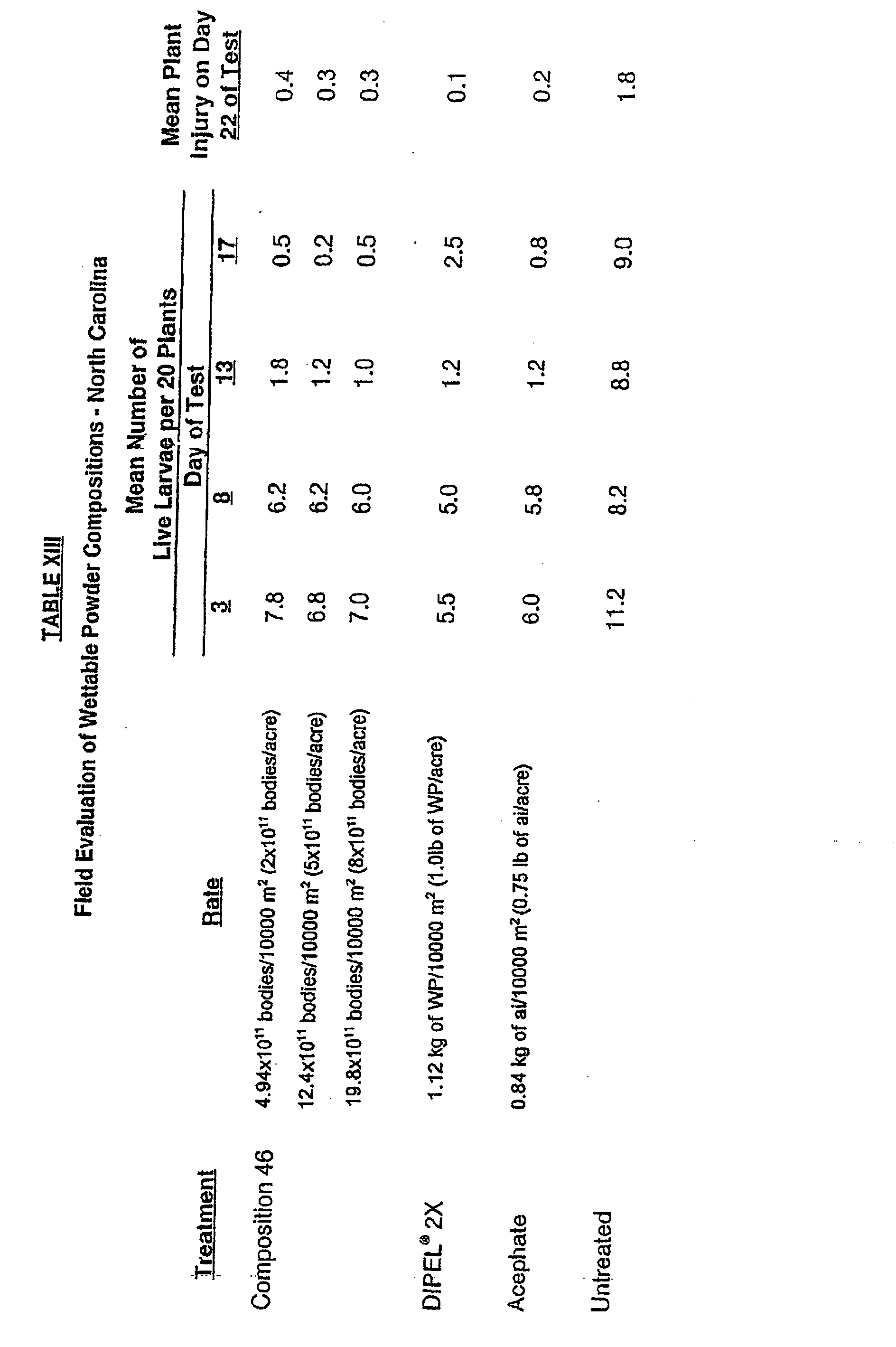

### EXAMPLE 10

### Field evaluation of wettable powder pesticidal compositions against tobacco budworms on tobacco in Georgia

A field evaluation is conducted on flue-cured tobacco (*var.* K-236) grown near Tifton, Georgia. A wettable powder composition of this invention (composition 47) at 4,94 x 10¹¹; 12,4 x 10¹¹; 19,8 x 10¹¹ bodies/10000 m² (2 x 10¹¹, 5 x 10¹¹, and 8 x 10¹¹ bodies/acre), *Bacillus thuringiensis* (DIPEL® 4L, available from Abbott Laboratories) at 1,4l/10000 m² (1.0 pint/acre), and methomyl (LANNATE® 2,4L, available from DuPont, Wilmington, Delaware) at 0,67 kg/10000 m² (0.6 lb active ingredient (ai)/acre) are compared for efficacy against *H. virescens*. Biological materials are suspended in water containing an insect gustatory stimulant (COAX® available from CCT Corp., Carlsbad, California) at 2,8 l /10000 m² (2.0 pints/acre); aqueous dilutions of methomyl contained no COAX®. Treatments and untreated check are replicated four times in a randomized complete block design. A treatment replicate consists of a five-row by 6,1 m (20 ft) plot of tobacco. Treatments are applied to tobacco on days 1, 5, 9, 17 and 22 of the test. Treatments are applied with a backpack, CO₂-pressurized boom sprayer which is calibrated to deliver 194l/10000 m² (20.7 gallons/acre) through three TX12 (Spraying Systems, Wheaton, IL) hollow-cone nozzles per row (one nozzle above center of the row and one nozzle directed at each of the two sides of the row). Boom pressure during application is 2,8 Bars (40 lb/in²).

On days 5, 8, 12, 22, 26 and 29 of the test, live *H. virescens* are counted on 20 plants in each plot. The results are summarized in Table XIV.

As can be seen from the data in Table XIV, the wettable powder composition of this invention (composition 47) provides good control of *H. virescens*.

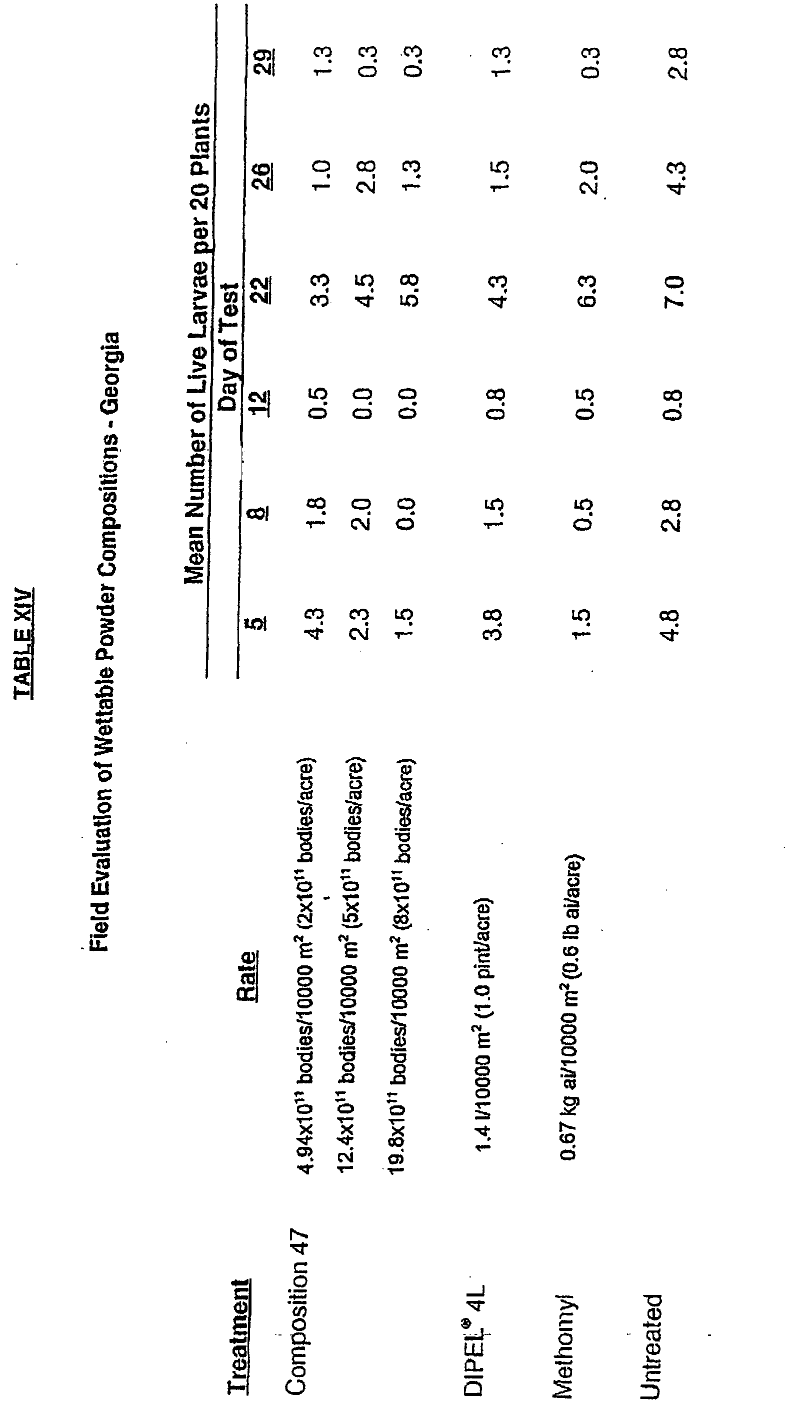

### EXAMPLE 11

### Evaluation of UV stability of wettable powder compositions comprising chlorfenapyr

Wettable powder compositions 50 and 51 from Table VIII, and a control composition identified below are evaluated for UV stability. An aqueous suspension of each test composition is applied to plastic petri dishes (100 mm x 15 mm) using a belt sprayer with nozzles calibrated to provide 400 l/10000 m² (400 l/ha). The test materials are applied at rates to provide the equivalent of 0.5, 1.0 and 5.0 g of chlorfenapyr per hectare. The dishes are dried and exposed to UV light using either a UV-B lamp (280-315 nm) or natural light for various periods of time. Three second-instar tobacco budworm larvae (*Heliothis virescens*) are then placed in each dish and the dishes are covered. After holding the dishes at 26.7°C for 48 hours, the surviving larvae are counted. The results are summarized in Tables XV and XVI.

As can be seen from the data in Tables XV and XVI, chlorfenapyr treatments made with the wettable powder compositions of this invention are significantly more stable to UV exposure than the control composition which does not incorporate chlorfenapyr into a pesticidal matrix.

| **Control Composition** | |
|---|---|
| **Ingredient** | **wt/wt%** |
| Chlorfenapyr (tech.) | 5.43 |
| MORWET®EFW | 8.60 |
| MORWET®D425 | 17.21 |
| Kaolin Clay | 56.75 |
| MIRO-CEL®E | 5.67 |
| Citric Acid¹ | 6.34 |

| | |
|---|---|
| ¹Mean particle size about 1-3 µm | |

**TABLE XV**

| **Evaluation of UV (natural light) Irradiated Chlorfenapyr Wettable Powder Compositions** | | | |
|---|---|---|---|
| **Wettable Powder Composition** | **Irradiation Exposure(days)** | **Percent Larval Mortality** | |
| | | 1.0 g/10000 m² | 0.5 g/10000 m² |
| 50 | 0 | 100 | 86 |
| | 2 | 74 | 58 |
| | 3 | 28 | 34 |
| | | | |
| 51 | 0 | 100 | 91 |
| | 2 | 100 | 75 |
| | 3 | 63 | 48 |
| | | | |
| Control Composition | 0 | 100 | 97 |
| | 2 | 54 | 34 |
| | 3 | 15 | 22 |

**TABLE XVI**

| **Evaluation of UV-B Lamp Irradiated Chlorfenapyr Wettable Powder Compositions** | | | |
|---|---|---|---|
| **Wettable Powder Composition** | **Irradiation Exposure(hours)** | **Percent Larval Mortality** | |
| | | 5.0 g/ha | 1.0 g/ha |
| 50 | 0 | 100 | 100 |
| | 8 | 100 | 76 |
| | 22 | 100 | 76 |
| | 37 | 100 | 0 |
| | | | |
| 51 | 0 | 100 | 100 |
| | 8 | 100 | 47 |
| | 22 | 100 | 21 |
| | 37 | 56 | 0 |
| | | | |
| Control Composition | 0 | 100 | 100 |
| | 8 | 100 | 31 |
| | 22 | 100 | 24 |
| | 37 | 14 | 6 |

## Claims

1. A process for the preparation of a coated pesticidal matrix which process comprises:
a) preparing an aqueous mixture comprising a pesticidal agent, a pH-dependent polymer that is insoluble below pH 5.5 and water, provided that the pH of the aqueous mixture is below the solubilization pH of the pH-dependent polymer; and
b) drying the aqueous mixture of step (a) to produce the coated pesticidal matrix.

2. A process as claimed in Claim 1 wherein one or more of a plasticizer, an activity enhancer and an ultraviolet protector and optionally a glidant is included in the aqueous mixture.

3. A process as claimed in Claim 1 or Claim 2 wherein the pesticidal agent is selected from the group consisting of an insecticide, an acaricide, a nematicide, a fungicide and a herbicide and mixtures thereof.

4. A process as claimed in any one of Claims 1 to 3 wherein the pesticidal agent is a chemical or a biological insecticide.

5. A process as claimed in any one of Claims 1 to 3 wherein the pesticidal agent is a chemical insecticide selected from the group consisting of chlorfenapyr, hydramethylnon, imidacloprid, 1-(6-chloro-3-pyridyl)-2-(nitromethylene) imidazolidine, fipronil, and 1-[1-(p-chlorphenyl-)-2-fluoro-4-(4-fluoro-3-phenoxyphenyl)-2-butenyl]cyclopropane, (R,S)-(Z)-, and mixtures thereof.

6. A process as claimed in any one of Claims 1 to 5 wherein the pesticidal agent is a biological insecticide selected from the group consisting of V8vEGTDEL, V8vEGTDEL-AaIT; *Heliothis* zea NPV, *Lymantria dispar* MPV, AcMNPV E2, AcMNPV L1, ACMNPV V8, AcMNPV Px1, and *Bacillus thuringiensis*, and mixtures thereof.

7. A process as claimed in any one of Claims 1 to 6 wherein the pH-dependent polymer is selected from the group consisting of an ethyl acrylate/methacrylic acid copolymer, a methyl methacrylate/methacrylic acid copolymer, a methacrylic acid/methyl acrylate/methyl methacrylate copolymer, and mixtures thereof; the plasticizer is selected from the group consisting of a poly(ethylene glycol), a poly(propylene glycol), a citric acid ester, diethyl phthalate, dibutyl phthalate, castor oil, triacetin, and mixtures thereof; the ultraviolet protector is selected from the group consisting of carbon black, a benzophenone, a dye, titanium dioxide. and mixtures thereof; the activity enhancer is a stilbene compound; and the glidant is selected from the group consisting of talc, magnesium stearate, calcium stearate, calcium sulfate, and mixtures thereof.

8. A process as claimed in any one of Claims 1 to 7 wherein the pH-dependent polymer is selected from the group consisting of an ethyl acrylate/methacrylic acid copolymer wherein the ratio of free carboxyl groups to esters is about 1:1, a methyl methacrylate/methacrylic acid copolymer wherein the ratio of free carboxyl groups to esters is from about 1:1 to about 1:2, a methacrylic acid/methyl acrylate/methyl methacrylate copolymer wherein the ratio of the monomers is about 1:5:2 to 3:7:3; and mixtures thereof; the plasticizer is selected from the group consisting of triethyl citrate and a poly(ethylene glycol) having an average molecular weight of about 1,000 to 10,000; and the stilbene compound is selected from the group consisting of Blancophor BBH®, Calcofluor White M2R®, Phorwite AR®, and mixtures thereof.

9. A process as claimed in any one of Claims 1 to 8 wherein the pR-dependent polymer is a methyl methacrylate/ methacrylic acid copolymer and is partially solubilized with base.

10. A process as claimed in Claim 9 wherein the base is selected from the group consisting of ammonium hydroxide, an alkali metal hydroxide, and an alkaline earth metal hydroxide.

11. A process as claimed in any one of Claims 1 to 10 wherein in said drying step the aqueous mixture is spray dried.

12. A process as claimed in any one of Claims 1 to 11 wherein the coated pesticidal matrix has a particle size less than about 20 µm

13. A process as claimed in any one of Claims 1 to 12 wherein the coated pesticidal matrix has a particle size of about 2 µm to 10 µm.

14. A process as claimed in any one of Claims 1 to 13 wherein the coated pesticidal matrix comprises about 1 to 50% by weight of the pesticidal agent, about 5 to 50% by weight of the pH-dependent polymer, 0 to about 25% by weight of the plasticizer, 0 to about 30% by weight of the ultraviolet protector, 0 to about 75% by weight of the activity enhancer, and 0 to about 15% by weight of the glidant.

15. A coated pesticidal matrix produceable by the process defined in any one of claims 1 to 14 which comprises about 1 to 50% by weight of a pesticidal agent, about 5 to 50% by weight of a pH-dependent polymer, 0 to about 25% by weight of a plasticizer 0 to about 30% by weight of an ultraviolet protector, 0 to about 75% by weight of an activity enhancer, and 0 to about 15% by weight of a glidant.

16. A coated pesticidal matrix as claimed in Claim 15 which comprises about 5 to 35% by weight of the pesticidal agent, about 10 to 45% by weight of the pH-dependent polymer, 0 to about 25% by weight of the plasticizer, 0 to about 20% by weight of the ultraviolet protector, 0 to about 45% by weight of the activity enhancer, and 0 to about 10% by weight of the glidant.

17. A coated pesticidal matrix as claimed in Claim 15 wherein the pH-dependent polymer is selected from the group consisting of an ethyl acrylate/methacrylic acid copolymer, a methyl methacrylate/methacrylic acid copolymer; a methacrylic acid/methyl acrylate/methyl methacrylate copolymer, and mixtures thereof; the plasticizer is selected from the group consisting of a poly(ethylene glycol), a poly(propylene glycol), a citric acid ester, diethyl phthalate, dibutyl phthalate, castor oil, triacetin, and mixtures thereof; the ultraviolet protector is selected from the group consisting of carbon black, a benzophenone, a dye, titanium dioxide, and mixtures thereof; the activity enhancer is a stilbene compound and the glidant is selected from the group consisting of talc, magnesium stearate, calcium stearate, calcium sulfate, and mixtures thereof.

18. A coated pesticidal matrix as claimed in Claim 17 wherein the pH-dependent polymer is selected from the group consisting of an ethyl acrylate/methacrylic acid copolymer wherein the ratio of free carboxyl groups to esters is about 1:1, a methyl methacrylate/methacrylic acid copolymer wherein the ratio of free carboxyl groups to esters is from about 1:1 to about 1:2, a methacrylic acid/methyl acrylate/methyl methacrylate copolymer wherein the ratio of monomers is about 1:5:2 to 3:7:3, and mixtures thereof; the plasticizer is selected from the group consisting of triethyl citrate and a poly(ethylene glycol) having an average molecular weight of about 1,000 to 10.000; and the stilbene compound is selected from the group consisting of Blancophor BBH®, Calcofluor White M2R® Phorwite AR®, and mixtures thereof.

19. A coated pesticidal matrix as claimed in any one of Claims 15 to 18 wherein the pesticidal agent is a chemical insecticide or a biological insecticide.

20. A coated pesticidal matrix as claimed in any one of Claims 15 to 18 wherein the pesticidal agent is a chemical insecticide selected from-the group consisting of chlorfenapyr, hydramethylnon, imidacloprid, 1-(6-chloro-3-pyridyl)-2-(nitromethylene)imidazolidine. fipronil, and 1-[1-(p-chlorophenyl)-2-fluoro-4-(4-fluoro-3-phenoxyphenyl)- 2-butenyl]cyclopropane, (R,S)-(Z)-, and mixtures thereof.

21. A coated pesticidal matrix as claimed in any one of Claims 15 to 18 wherein the pesticidal agent is a biological insecticide selected from the group consisting of V8vEGTDEL, V8vEGT-DEL-AaIT, *Heliothis zea* NPV, *Lymantria dispar* NPV, AcMNPV E2, AcMNPV L1, ACMNPV V8, AcMNPV Px1, and *Bacillus thuringiensis*, and mixtures thereof.

22. A coated pesticidal matrix as claimed in any one of Claims 15 to 21 having a particle size of less than about 20 µm.

23. A coated pesticidal matrix as claimed in any one of Claims 15 to 21 having a particle size of about 2 µm to 10 µm.

24. A wettable powder pesticidal composition which comprises about 0.5 to 40% by weight of a dispersing agent; about 1 to 10% by weight of a flow enhancing agent; about 10 to 70% by weight of a bulking agent; 0 to about 25% by weight of a welting agent; 0 to about 35% by weight of a pH-modifying agent; and about 5 to 75% by weight of a coated pesticidal matrix as defined in any one of Claims 15 to 21.

25. A composition as claimed in Claim 24 which comprises about 2 to 15% by weight of the dispersing agent; about 1 to 10% by weight of the flow enhancing agent; about 10 to 60% by weight of the bulking agent; 0 to about 15% by weight of the wetting agent; 0 to about 20% by weight of the pH-modifying agent; and about 5 to 75% by weight of the coated pesticidal matrix.

26. A composition as claimed in Claim 24 or Claim 25 wherein the pesticidal agent in the coated pesticidal matrix is a biological agent.

27. A composition as claimed in Claim 26 which comprises about 2 to 10% by weight of the dispersing agent; about 1 to 10% by weight of the flow enhancing agent; about 20 to 50% by weight of the bulking agent; about 2 to 20% by weight of the pH-modifying agent; and about 15 to 60% by weight of the coated pesticidal matrix.

28. A composition as claimed in any one of Claims-24 to 27 wherein the pH-modifying agent is an organic acid.

29. A composition as claimed in Claim 28 wherein the organic acid is citric acid.

30. A composition as claimed in Claim 28 wherein the organic acid has a mean particle size greater than about 50 µm.

31. A composition as claimed in Claim 30 wherein the organic acid has a mean particle size greater than about 100 µm.

32. A method for improving the residual control of a pest which comprises applying to the area of the pest a pesticidally effective amount of a coated pesticidal matrix as defined in any one of Claims 15 to 31.

## Patentansprüche

1. Verfahren zur Herstellung einer beschichteten Pestizid-Matrix, wobei das Verfahren umfasst:
a) Herstellung einer wässerigen Mischung, umfassend ein Pestizid, ein pH-abhängiges Polymer, das unterhalb von pH 5,5 unlöslich ist, und Wasser, wobei der pH der wässerigen Mischung unterhalb des Solubilisierungs-pH des pH-abhängigen Polymers liegt; und
b) Trocknen der wässerigen Mischung von Schritt a), um die beschichtete Pestizid-Matrix zu erhalten.

2. Das Verfahren gemäß Anspruch 1, wobei der wässerigen Mischung ein Weichmacher, ein Aktivitätsverstärker oder ein Ultraviolett-Protektor sowie wahlweise ein Gleitmittel zugesetzt wird.

3. Das Verfahren gemäß Anspruch 1 oder 2, wobei das Pestizid ausgewählt ist aus der Gruppe, bestehend aus einem Insektizid, einem Akarizid, einem Nematizid, einem Fungizid und einem Herbizid und Mischungen derselben.

4. Das Verfahren gemäß einem der Ansprüche 1 bis 3, wobei das Pestizid ein chemisches oder biologisches Insektizid ist.

5. Das Verfahren gemäß einem der Ansprüche 1 bis 3, wobei das Pestizid ein chemisches Insektizid ist, ausgewählt aus der Gruppe, bestehend aus Chlorfenapyr, Hydramethylnon, Imidacloprid, 1-(6-Chlor-3-pyridyl)-2-(nitromethylen)imidazolidin, Fipronil und 1-[1-(p-Chlorphenyl)-2-fluor-4-(4-fluor-3-phenoxyphenyl)-2-butenyl]cyclopropan, (R,S)-(Z)- und Mischungen derselben.

6. Das Verfahren gemäß einem der Ansprüche 1 bis 5, wobei das Pestizid ein biologisches Insektizid ist ausgewählt aus der Gruppe bestehend aus V8vEGTDEL, V8vEGTDEL-AalT, Heliothis zea NPV, Lymantria dispar NPV, AcMNPV E2, AcMNPV L1, ACMNPV V8, AcMNPV Px1 und Bacillus thuringiensis sowie Mischungen derselben.

7. Das Verfahren gemäß einem der Ansprüche 1 bis 6, wobei das pH-abhängige Polymer ausgewählt ist aus der Gruppe bestehend aus einem Ethylacrylat/Methacrylsäure-Copolymer, einem Methylmethacrylat/Methyacrylsäure-Copolymer, einem Methacrylsäure/Methylacrylat/Methylmethacrylat-Copolymer und Mischungen derselben; der Weichmacher ausgewählt ist aus der Gruppe bestehend aus einem Poly(ethylenglykol), einem Poly(propylenglykol), einem Zitronensäureester, Diethylphthalat, Dibutylphthalat, Rizinusöl (castor oil), Triacetin und Mischungen derselben; der Ultraviolett-Protektor ausgewählt ist aus der Gruppe bestehend aus Ruß, einem Benzophenon, einem Farbstoff, Titandioxid und Mischungen derselben; der Aktivitätsverstärker eine Stilbenverbindung ist;
und wobei das Gleitmittel ausgewählt ist aus der Gruppe bestehend aus Talkum, Magnsiumstearat, Calciumstearat, Calciumsulfat und Mischungen derselben.

8. Das Verfahren gemäß einem der Ansprüche 1 bis 7, wobei das pH-abhängige Polymer ausgewählt ist aus der Gruppe, bestehend aus einem Ethylacrylat/Methacrylsäure-Copolymer, bei dem das Verhältnis der freien Carboxylgruppen zu Estergruppen ungefähr 1:1 ist, einem Methylacrylat/Methacrylsäure-Copolymer, bei dem das Verhältnis der freien Carboxylgruppen zu Estergruppen ungefähr 1:1 bis 1:2 beträgt, ein Methacrylsäure/Methylacrylat/Methylmethacrylat-Copolymer, bei dem das Verhältnis der Monomeren ungefähr 1:5:2 bis 3:7:3 beträgt; sowie Mischungen derselben; der Weichmacher ausgewählt ist aus der Gruppe bestehend aus Triethylcitrat und einem Poly(ethylenglykol), der ein durchschnittliches Molekulargewicht von ungefähr 1.000 bis 10.000 aufweist;
und die Stilbenverbindung ausgewählt ist aus der Gruppe bestehend aus Blancophor BBH®, Calcofluor White M2R®, Phorwite AR® und Mischungen derselben.

9. Das Verfahren gemäß einem der Ansprüche 1 bis 8, wobei das pH-abhängige Polymer ein Methylmethacrylat/Methacrylsäure-Copolymer ist und mittels einer Base teilweise solubilisiert wird.

10. Das Verfahren gemäß Anspruch 9, wobei die Base ausgewählt ist aus der Gruppe bestehend aus Ammoniumhydroxid, einem Alkalimetallhydroxid und einem Erdalkalimetallhydroxid.

11. Das Verfahren gemäß einem der Ansprüche 1 bis 10, wobei die wässerige Mischung in dem Trocknungsschritt sprühgetrocknet wird.

12. Das Verfahren gemäß einem der Ansprüche 1 bis 11, wobei die beschichtete Pestizid-Matrix eine Partikelgröße von weniger als ungefähr 20 µm aufweist.

13. Das Verfahren gemäß einem der Ansprüche 1 bis 12, wobei die beschichtete Pestizid-Matrix eine Partikelgröße von ungefähr 2 bis 10 µm aufweist.

14. Das Verfahren gemäß einem der Ansprüche 1 bis 13, wobei die beschichtete Pestizid-Matrix ungefähr 1 bis 50 Gew.-% des Pestizids, ungefähr 5 bis 50 Gew.-% des pH-abhängigen Polymers, 0 bis ungefähr 25 Gew.-% des Weichmachers, 0 bis ungefähr 30 Gew.-% des Ultarviolett-Protektors, 0 bis ungefähr 75 Gew.-% des Aktivitätsverstärkers und 0 bis ungefähr 15 Gew.-% des Gleitmittels enthält.

15. Eine beschichtete Pestizid-Matrix, die nach dem Verfahren gemäß einem der Ansprüche 1 bis 14 herstellbar ist und ungefähr 1 bis 50 Gew.-% eines Pestizids, ungefähr 5 bis 50 Gew.-% eines pH-abhängigen Polymers, 0 bis ungefähr 25 Gew.-% eines Weichmachers, 0 bis ungefähr 30 Gew.-% eines Ultraviolett-Protektors, 0 bis ungefähr 75 Gew.-% eines Aktivitätsverstärkers und 0 bis ungefähr 15 Gew.-% eines Gleitmittels umfasst.

16. Die beschichtete Pestizid-Matrix gemäß Anspruch 15, die ungefähr 5 bis 35 Gew.-% des Pestizids, ungefähr 10 bis 45 Gew.-% des pH-abhängigen Polymers, 0 bis ungefähr 25 Gew.-% des Weichmachers, 0 bis ungefähr 20 Gew.-% des Ultraviolett-Protektors, 0 bis ungefähr 45 Gew.-% des Aktivitätsverstärkers und 0 bis ungefähr 10 Gew.-% des Gleitmittels umfasst.

17. Die beschichtete Pestizid-Matrix gemäß Anspruch 15, wobei das pH-abhängige Polymer ausgewählt ist aus der Gruppe, bestehend aus einem Ethylacrylat/Methacrylsäure-Copolymer, einem Methylmethacrylat/Methyacrylsäure-Copolymer, einem Methacrylsäure/Methylacrylat/Methylmethacrylat-Copolymer und Mischungen derselben; der Weichmacher ausgewählt ist aus der Gruppe bestehend aus einem Poly(ethylenglykol), einem Poly(propylenglykol), einem Zitronensäureester, Diethylphthalat, Dibutylphthalat, Rizinusöl (castor oil), Triacetin und Mischungen derselben; der Ultraviolett-Protektor ausgewählt ist aus der Gruppe bestehend aus Ruß, einem Benzophenon, einem Farbstoff, Titandioxid und Mischungen derselben; der Aktivitätsverstärker eine Stilbenverbindung ist;
und wobei das Gleitmittel ausgewählt ist aus der Gruppe, bestehend aus Talkum, Magnsiumstearat, Calciumstearat, Calciumsulfat und Mischungen derselben.

18. Die beschichtete Pestizid-Matrix gemäß Anspruch 17, wobei das pH-abhängige Polymer ausgewählt ist aus der Gruppe bestehend aus einem Ethylacrylat/Methacrylsäure-Copolymer, bei dem das Verhältnis der freien Carboxylgruppen zu Estergruppen ungefähr 1:1 ist, einem Methylmethacrylat/Methacrylsäure-Copolymer, bei dem das Verhältnis der freien Carboxylgruppen zu Estergruppen ungefähr 1:1 bis 1:2 beträgt, ein Methacrylsäure/Methylacrylat/Methylmethacrylat-Copolymer, bei dem das Verhältnis der Monomeren ungefähr 1:5:2 bis 3:7:3 beträgt; sowie Mischungen derselben; der Weichmacher ausgewählt ist aus der Gruppe bestehend aus Triethylcitrat und einem Poly(ethylenglykol), der ein durchschnittliches Molekulargewicht von ungefähr 1.000 bis 10.000 aufweist;
und die Stilbenverbindung ausgewählt ist aus der Gruppe bestehend aus Blancophor BBH®, Calcofluor White M2R®, Phorwite AR® und Mischungen derselben.

19. Die beschichtete Pestizid-Matrix gemäß einem der Ansprüche 15 bis 18, wobei das Pestizid ein chemisches Insektizid oder ein biologisches Insektizid ist.

20. Die beschichtete Pestizid-Matrix gemäß einem der Ansprüche 15 bis 18, wobei das Pestizid ein chemisches Insektizid ist ausgewählt aus der Gruppe bestehend aus Chlorfenapyr, Hydramethylnon, Imidacloprid, 1-(6-Chlor-3-pyridyl)-2-(nitromethylen)imidazolidin, Fipronil und 1-[1-(p-Chlorphenyl)-2-fluor-4-(4-fluor-3-phenoxyphenyl)-2-butenyl]cyclo- propan, (R,S)-(Z)- und Mischungen derselben.

21. Die beschichtete Pestizid-Matrix gemäß einem der Ansprüche 15 bis 18, wobei das Pestizid ein biologisches Insektizid ist ausgewählt aus der Gruppe bestehend aus V8vEGTDEL, V8vEGTDEL-AalT, Heliothis zea NPV, Lymantria dispar NPV, AcMNPV E2, AcMNPV L1, ACMNPV V8, AcMNPV Px1 und Bacillus thuringiensis sowie Mischungen derselben.

22. Die beschichtete Pestizid-Matrix gemäß einem der Ansprüche 15 bis 21, die eine Partikelgröße von weniger als ca. 20 µm aufweist.

23. Die beschichtete Pestizid-Matrix gemäß einem der Ansprüche 15 bis 21, die eine Partikelgröße von ungefähr 2 bis 10 µm aufweist.

24. Benetzbare pulverförmige Pestizidzusammensetzung, die ungefähr 0,5 bis 40 Gew.-% eines Dispersionsmittels, ungefähr 1 bis 10 Gew.-% eines Mittels zur Verbesserung der Rieselfähigkeit (flow enhancing agent), ungefähr 10 bis 70 Gew.-% eines Füllstoffs, 0 bis ungefähr 25 Gew.-% eines Benetzungsmittels, 0 bis ungefähr 35 Gew.-% eines pH-modifizierenden Mittels und ungefähr 5 bis 75 Gew.-% der beschichteten Pestizid-Matrix gemäß einem der Ansprüche 15 bis 21 enthält.

25. Die Zusammensetzung gemäß Anspruch 24, die ungefähr 2 bis 15 Gew.-% des Dispersionsmittels, ungefähr 1 bis 10 Gew.-% des die Rieselfähigkeit verbessernden Mittels, ungefähr 10 bis 60 Gew.-% des Füllstoffs, 0 bis ungefähr 15 Gew.-% des Benetzungsmittels, 0 bis ungefähr 20 Gew.-% des pH-modifizierenden Mittels und ungefähr 5 bis 75 Gew.-% der beschichteten Pestizid-Matrix enthält.

26. Die Zusammensetzung gemäß Anspruch 24 oder 25, wobei das Pestizid in der beschichteten Pestizid-Matrix ein biologisches Mittel ist.

27. Die Zusammensetzung gemäß Anspruch 26, die ungefähr 2 bis 10 Gew.-% des Dispersionsmittels, ungefähr 1 bis 10 Gew.-% des die Rieselfähigkeit verbessernden Mittels, ungefähr 20 bis 50 Gew.-% des Füllstoffs, ungefähr 2 bis 20 Gew.-% des pH-modifizierenden Mittels und ungefähr 15 bis 60 Gew.-% der beschichteten Pestizid-Matrix enthält.

28. Die Zusammensetzung gemäß einem der Ansprüche 24 bis 27, wobei das pHmodifizierende Mittel eine organische Säure ist.

29. Die Zusammensetzung gemäß Anspruch 28, wobei die organische Säure Zitronensäure ist.

30. Die Zusammensetzung gemäß Anspruch 28, wobei die organische Säure eine mittlere Partikelgröße von mehr als ungefähr 50 µm aufweist.

31. Die Zusammensetzung gemäß Anspruch 30, wobei die organische Säure eine mittlere Partikelgröße von mehr als 100 µm aufweist.

32. Verfahren zur Verbesserung der Schädlingskontrolle, wobei das Verfahren das Aufbringen einer pestizidwirksamen Menge der beschichteten Pestizid-Matrix gemäß einem der Ansprüche 15 bis 31 auf das durch den Schädling befallene Gebiet umfasst.

## Revendications

1. Procédé de préparation d'une matrice de pesticides enrobée, ledit procédé comprenant :
a) la préparation d'un mélange aqueux qui est soluble à un pH inférieur à 5,5 comprenant un agent pesticide, un polymère dépendant du pH et de l'eau, étant entendu que le pH du mélange aqueux soit inférieur au pH de solubilisation du polymère dépendant du pH ; et
b) le séchage du mélange aqueux de l'étape (a) pour produire la matrice de pesticides enrobée.

2. Procédé selon la revendication 1, dans lequel un ou plusieurs plastifiant, amplificateur d'activité et protecteur contre les ultraviolets et optionnellement un agent glissant est inclus au mélange aqueux.

3. Procédé selon la revendication 1 ou la revendication 2, dans lequel l'agent pesticide est choisi parmi le groupe consistant en un insecticide, un acaricide, un nématicide, un fongicide et un herbicide et des mélanges de ceux-ci.

4. Procédé selon l'une quelconque des revendications 1 à 3, dans lequel l'agent pesticide est un produit chimique ou un insecticide biologique.

5. Procédé selon l'une quelconque des revendications 1 à 3, dans lequel l'agent pesticide est un insecticide chimique choisi parmi le groupe consistant en le chlorfenapyr, hydraméthylnon, imidaclopride, imidazolidine 1-(6-chloro-3-pyridyle)-2-(nitrométhylène), fipronile, et (R, S)-(Z)-1-[1-(p-chlorphényle-)-2-fluoro-4-(4-fluoro-3-phénoxyphényle)-2-butényle]cyclopropane, et les mélanges de ceux-ci.

6. Procédé selon l'une quelconque des revendications 1 à 5, dans lequel l'agent pesticide est un insecticide biologique choisi parmi le groupe consistant en V8vEGTDEL, V8vEGTDEL-AaIT ; *Heliothis* zea NPV, *Lymantria dispar* NPV, AcMNPV E2, AcMNPV L1, ACMNPV V8, AcMNPV Px1, et *Bacillus thuringiensis*, et les mélanges de ceux-ci.

7. Procédé selon l'une quelconque des revendications 1 à 6, dans lequel le polymère dépendant du pH est choisi parmi le groupe consistant en un copolymère d'acrylate d'éthyle/d'acide méthacrylique, un copolymère de méthacrylate de méthyle/d'acide méthacrylique, un copolymère d'acide méthacrylique/d'acrylate de méthyle/de méthacrylate de méthyle, et les mélanges de ceux-ci ;le plastifiant est choisi parmi le groupe consistant en un poly(éthylèneglycol), un poly(propylèneglycol), un ester d'acide citrique, un phthalate de diéthyle, un phthalate de dibutyle, de l'huile de ricin, de la triacétine, et des mélanges de ceux-ci ; le protecteur contre les ultraviolets est choisi parmi le groupe consistant en noir de carbone, en un benzophénone, en un colorant, en dioxyde de titane, et les mélanges de ceux-ci ; l'amplificateur d'activité est un composé de stilbène ; et le glissant est choisi parmi le groupe consistant en le talc, le stéarate de magnésium, le stéarate de calcium, le sulfate de calcium, et les mélanges de ceux-ci.

8. Procédé selon l'une quelconque des revendications 1 à 7, dans lequel le polymère dépendant du pH est choisi parmi le groupe consistant en un copolymère d'acrylate d'éthyle/d'acide méthacrylique dans lequel le rapport entre les groupes carboxyles libres et les esters est d'environ 1:1, un copolymère de méthacrylate de méthyle/d'acide méthacrylique dans lequel le rapport entre les groupes carboxyles libres et les esters est d'environ 1:1 à environ 1:2, un copolymère d'acide méthacrylique/d'acrylate de méthyle/de méthacrylate de méthyle dans lequel le rapport entre les monomères est d'environ 1:5:2 à 3:7:3 ; et les mélanges de ceux-ci ; le plastifiant est choisi parmi le groupe consistant en le citrate de triéthyle et le poly(éthylèneglycol) possédant un poids moléculaire moyen d'environ 1000 à 10000 ; et le composé de stilbène est choisi parmi le groupe consistant en Blancophor BBH®, Calcofluor White M2R®, Phorwite AR® et en mélanges de ceux-ci.

9. Procédé selon l'une quelconque des revendications 1 à 8, dans lequel le polymère dépendant du pH est un copolymère de méthacrylate de méthyle/d'acide méthacrylique et est partiellement solubilisé avec une base.

10. Procédé selon la revendication 9, dans lequel la base est choisie parmi le groupe consistant en hydroxyde d'ammonium, un hydroxyde de métal alcalin, et un hydroxyde de métal alcalino-terreux.

11. Procédé selon l'une quelconque des revendications 1 à 10, dans lequel lors de ladite étape de séchage, le mélange aqueux est séché par atomisation.

12. Procédé selon l'une quelconque des revendications 1 à 11, dans lequel la matrice de pesticides enrobée possède une taille de particules inférieure à environ 20 µm.

13. Procédé selon l'une quelconque des revendications 1 à 12, dans lequel la matrice de pesticides enrobée possède une taille de particules d'environ 2 µm à 10 µm.

14. Procédé selon l'une quelconque des revendications 1 à 13, dans lequel la matrice de pesticides enrobée comprend environ 1 à 50% par poids de l'agent pesticide, environ 5 à 50% par poids du polymère dépendant du pH, environ 0 à 25% par poids du plastifiant, environ 0 à 30% par poids du protecteur contre les ultraviolets, environ 0 à 75% par poids de l'amplificateur d'activité, et environ 0 à 15% par poids du glissant.

15. Matrice de pesticides enrobée susceptible d'être produite par le procédé défini dans l'une quelconque des revendications 1 à 14, qui comprend environ 1 à 50% par poids d'un agent pesticide, environ 5 à 50% par poids d'un polymère dépendant du pH, environ 0 à 25% par poids d'un plastifiant, environ 0 à 30% par poids d'un protecteur contre les ultraviolets, environ 0 à 75% par poids d'un amplificateur d'activité, et environ 0 à 15% par poids d'un glissant.

16. Matrice de pesticides enrobée selon la revendication 15, qui comprend environ 5 à 35% par poids de l'agent pesticide, environ 10 à 45% par poids du polymère dépendant du pH, environ 0 à 25% par poids du plastifiant, environ 0 à 20% par poids du protecteur contre les ultraviolets, environ 0 à 45% par poids de l'amplificateur d'activité, et environ 0 à 10% par poids du glissant.

17. Matrice de pesticides enrobée selon la revendication 15, dans laquelle le polymère dépendant du pH est choisi parmi le groupe consistant en un copolymère d'acrylate d'éthyle/d'acide méthacrylique, un copolymère de méthacrylate de méthyle/d'acide méthacrylique ; un copolymère d'acide méthacrylique/d'acrylate de méthyle/de méthacrylate de méthyle, et les mélanges de ceux-ci ; le plastifiant est choisi parmi le groupe consistant en le poly(éthylèneglycol), le poly(propylèneglycol), un ester d'acide citrique, un phthalate de diéthyle, en un phthalate de dibutyle, huile de ricin, triacétine, et les mélanges de ceux-ci ; le protecteur contre les ultraviolets est choisi parmi le groupe consistant en noir de carbone, benzophénone, un colorant, le dioxyde de titane, et les mélanges de ceux-ci ; l'amplificateur d'activité est un composé de stilbène et le glissant est choisi parmi le groupe consistant en le talc, le stéarate de magnésium, le stéarate de calcium, le sulfate de calcium, et les mélanges de ceux-ci.

18. Matrice de pesticides enrobée selon la revendication 17, dans laquelle le polymère dépendant du pH est choisi parmi le groupe consistant en un copolymère d'acrylate d'éthyle/d'acide méthacrylique dans lequel le rapport entre les groupes carboxyles libres et les esters est d'environ 1:1, en un copolymère de méthacrylate de méthyle/d'acide méthacrylique dans lequel le rapport entre les groupes carboxyles libres et les esters est d'environ 1:1 à environ 1:2, en un copolymère d'acide méthacrylique/d'acrylate de méthyle/de méthacrylate de méthyle dans lequel le rapport entre les monomères est d'environ 1:5:2 à 3:7:3, et en mélanges de ceux-ci ; le plastifiant est choisi parmi le groupe consistant en citrate de triéthtyle et en un poly(éthylèneglycol) possédant un poids moléculaire moyen d'environ 1000 à 10000 ; et le composé de stilbène est choisi parmi le groupe consistant en Blancophor BBH®, Calcofluor White M2R®, Phorwite AR®, et les mélanges de ceux-ci.

19. Matrice de pesticides enrobée selon l'une quelconque des revendications 15 à 18, dans laquelle l'agent pesticide est un insecticide chimique ou un insecticide biologique.

20. Matrice de pesticides enrobée selon l'une quelconque des revendications 15 à 18, dans laquelle l'agent pesticide est un insecticide chimique choisi parmi le groupe consistant en chlorfenapyr, hydraméthylnon, imidaclopride, imidazolidine 1-(6-chloro-3-pyridyle)-2-(nitrométhylène), fipronile, et (R, S)-(Z)-1-[1-(p-chlorophényle)-2-fluoro-4-(4-fluoro-3-phénoxyphényle)-2-butényle]cyclopropane, , et les mélanges de ceux-ci.

21. Matrice de pesticides enrobée selon l'une quelconque des revendications 15 à 18, dans laquelle l'agent pesticide est un insecticide biologique choisi parmi le groupe consistant en V8vEGTDEL, V8vEGTDEL-AaIT, *Heliothis zea* NPV, *Lymantria dispar* NPV, AcMNPV E2, AcMNPV L1, ACMNPV V8, AcMNPV Px1, et *Bacillus thuringiensis*, et les mélanges de ceux-ci.

22. Matrice de pesticides enrobée selon l'une quelconque des revendications 15 à 21, possédant une taille de particules inférieure à environ 20 µm.

23. Matrice de pesticides enrobée selon l'une quelconque des revendications 15 à 21, possédant une taille de particules d'environ 2µm à 10 µm.

24. Composition pesticide en poudre mouillable qui comprend environ 0,5 à 40% par poids d'un agent de dispersion ; environ 1 à 10% par poids d'un agent facilitant l'écoulement ; environ 10 à 70% par poids d'un agent diluant ; environ 0 à 25% par poids d'un agent mouillant ; environ 0 à 35% par poids d'un agent modificateur de pH ; et environ 5 à 75% par poids d'une matrice de pesticides enrobée selon l'une quelconque des revendications 15 à 21.

25. Composition selon la revendication 24, qui comprend environ 2 à 15% en poids de l'agent de dispersion ; environ 1 à 10% en poids de l'agent facilitant l'écoulement ; environ 10 à 60% en poids de l'agent diluant ; environ 0 à 15% en poids de l'agent mouillant ; environ 0 à 20% en poids de l'agent modificateur de pH ; et environ 5 à 75% en poids de la matrice de pesticides enrobée.

26. Composition selon la revendication 24 ou la revendication 25, dans laquelle l'agent pesticide dans la matrice de pesticides enrobée est un agent biologique.

27. Composition selon la revendication 26, qui comprend environ 2 à 10% en poids de l'agent de dispersion ; environ 1 à 10% en poids de l'agent facilitant l'écoulement ; environ 20 à 50% en poids de l'agent diluant ; environ 2 à 20% en poids de l'agent modificateur de pH ; et environ 15 à 60% en poids de la matrice de pesticides enrobée.

28. Composition selon l'une quelconque des revendications 24 à 27, dans laquelle l'agent modificateur de pH est un acide organique.

29. Composition selon la revendication 28, dans laquelle l'acide organique est de l'acide citrique.

30. Composition selon la revendication 28, dans laquelle l'acide organique possède une taille de particules moyenne supérieure à environ 50 µm.

31. Composition selon la revendication 30, dans laquelle l'acide organique possède une taille de particules moyenne supérieure à environ 100 µm.

32. Procédé pour améliorer le contrôle résiduel d'un insecte nuisible, qui comprend l'application sur la zone de l'insecte nuisible d'une quantité efficace sur le plan pesticide d'une matrice de pesticides enrobée selon l'une quelconque des revendications 15 à 31.
